# EUROPEAN PATENT APPLICATION

(11) **EP 4 099 166 A1**
(43) Date of publication of application: **07.12.2022**
(21) Application number: 21176937.7
(22) Date of filing: 31.05.2021
(51) Int. Cl.: G06F 9/50, H04L 12/24, G06N 20/00

(54) **DISTRIBUTED COORDINATED MANAGEMENT OF MACHINE LEARNING MODELS AND APPLICATIONS**

(71) Applicant: Nokia Technologies Oy, 02610 Espoo (FI)
(72) Inventor: GIUST, Fabio, 82049 Pullach (DE); ANDRIANOV, Anatoly, Schaumburg, 60173 (US); STEPHENS, Paul, Long Grove, 60047 (US)
(74) Representative: TBK

(57) **Abstract**

There are provided measures for distributed coordinated management of machine learning models and applications. Such measures exemplarily comprise, at a controller function entity, receiving, from an orchestrating entity, a deployment instruction instructing deployment of a controller functionality, and deploying said controller functionality, wherein in relation to said controller functionality, the measures exemplarily further comprise receiving, from said orchestrating entity, information on a goal related to network performance of a network portion, and transmitting, based on said goal, towards at least one first controlled function entity, a deployment instruction instructing deployment of at least one first controlled functionality.

## Description

### Field

Various example embodiments relate to distributed coordinated management of machine learning models and applications. More specifically, various example embodiments exemplarily relate to measures (including methods, apparatuses and computer program products) for realizing distributed coordinated management of machine learning models and applications.

### Background

The present specification generally relates to machine learning (ML) model management.

ML model management is a key aspect in the open radio access network (0-RAN) system, and, more in general, in any telecom system, which makes use of artificial intelligence (AI)/ML to govern certain operations. For this reason, it has become a preeminent discussion topic in O-RAN alliance, as well as in 3^{rd} Generation Partnership Project (3GPP) SA2 and SA5.

Specifically to O-RAN, the ML model management is coupled to the lifecycle of modular applications, called rApps and xApps, which can be installed in the O-RAN system to expand its capabilities. In particular, rApps are hosted by the Non real-time (Non-RT) radio intelligent controller (RIC), whereas xApps are hosted in the Near real-time (Near-RT) RIC.

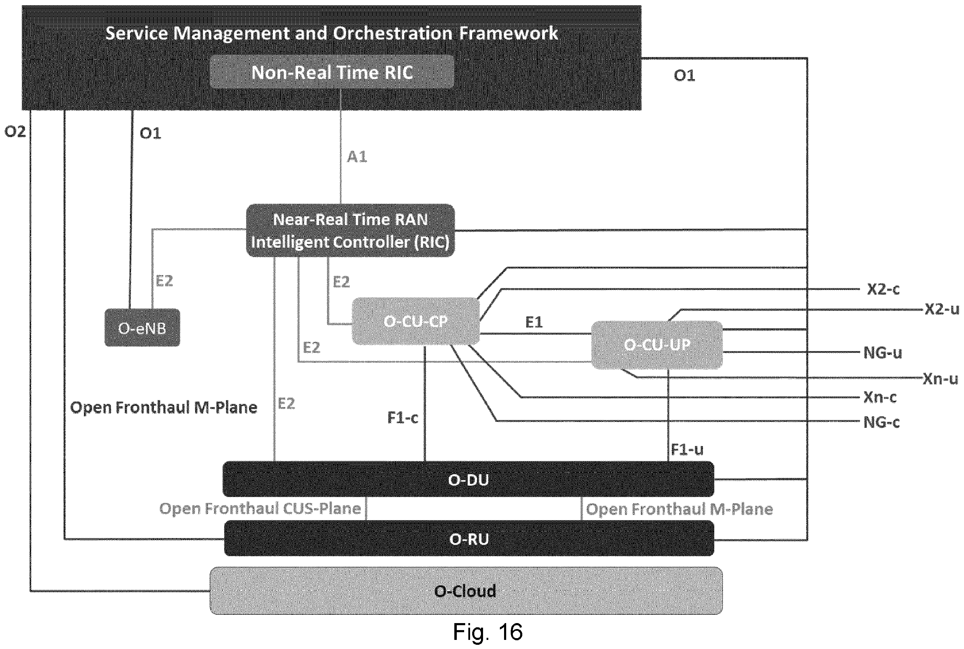

Figure 16 is a schematic diagram illustrating a logical architecture of open radio access network.

Figure 16 shows the overall O-RAN system architecture, where Non-RT RIC and Near-RT RIC are portrayed, along with the interfaces that interconnect the components.

ML model management is instrumental to control an ML workflow, i.e., the process consisting of data collection and preparation, model building, model training, model deployment, model execution, model validation, continuous model self-monitoring and self-learning/retraining related to ML-assisted solutions. Each of the steps above may be implemented through or by one or multiple rApps/xApps, or by a combination thereof.

One of the most interesting aspects from O-RAN, which is relevant to this invention, is the fact that there are four deployment scenarios, in which the workflow of ML models can be executed:
1. AI/ML continuous operation, AI/ML model management, data preparation, AI/ML training, and AI/ML inference are all in Non-RT RIC,
2. AI/ML continuous operation, data preparation (for training), and AI/ML training are in Non-RT RIC; AI/ML model management is out of Non-RT RIC (in or out of service management and orchestration (SMO)); data collection (for inference), data preparation (for inference), and AI/ML Inference is in Near-RT RIC,
3. AI/ML continuous operation and AI/ML inference are in Non-RT RIC; data preparation, AI/ML training, and AI/ML model management are out of Non-RT RIC (in or out of SMO), and
4. AI/ML continuous operation, AI/ML model management, data preparation, and AI/ML training host are in Non-RT RIC; open central unit (O-CU)/open distributed unit (O-DU) act as the AI/ML inference host.

As already mentioned, the rApps/xApps are key to bring the AI/ML logic into the O-RAN system, as most of the AI/ML-related operations happen through them. Therefore, managing the ML Model is coupled to managing the (r/x)Apps.

In addition to O-RAN, the AI/ML model management has been discussed in 3GPP - as part of the enablers for Network Automation (eNA) work in 3GPP SA2 and as part of management data analytics service (MDAS) work in 3GPP SA5. The need to be able to efficiently handle the AI/ML models and their training has been acknowledged in both WGs. However, serious concerns about potential disclosure of the vendors' commercial secrets (e.g., know-how related to radio access network (RAN) optimization) have been recognized. In 3GPP SA5, the study on MDAS has been concluded with recommendation to standardize AI/ML model management without introducing unnecessary tight coupling. In 3GPP SA2, it was agreed that AI/ML models are exchanged only between network functions (NF) of the same vendor. However, operators participating in 3GPP expressed the intention to remove the limitation.

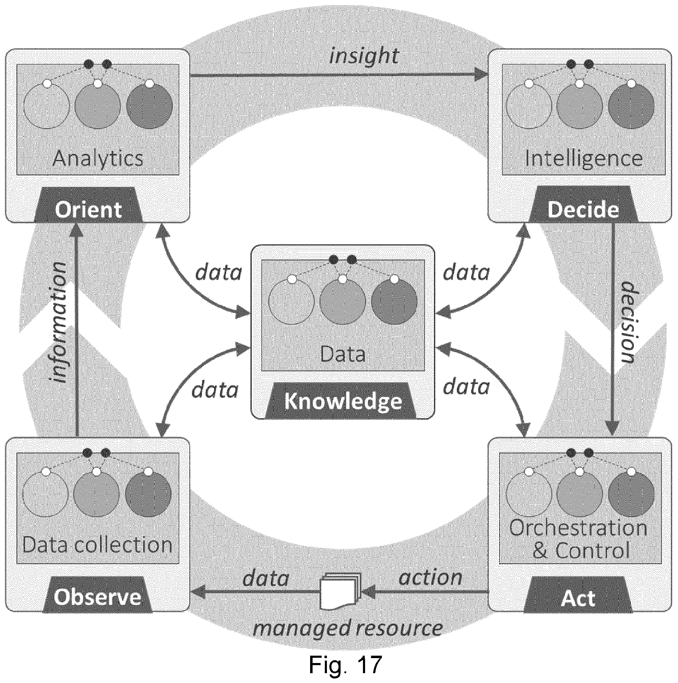

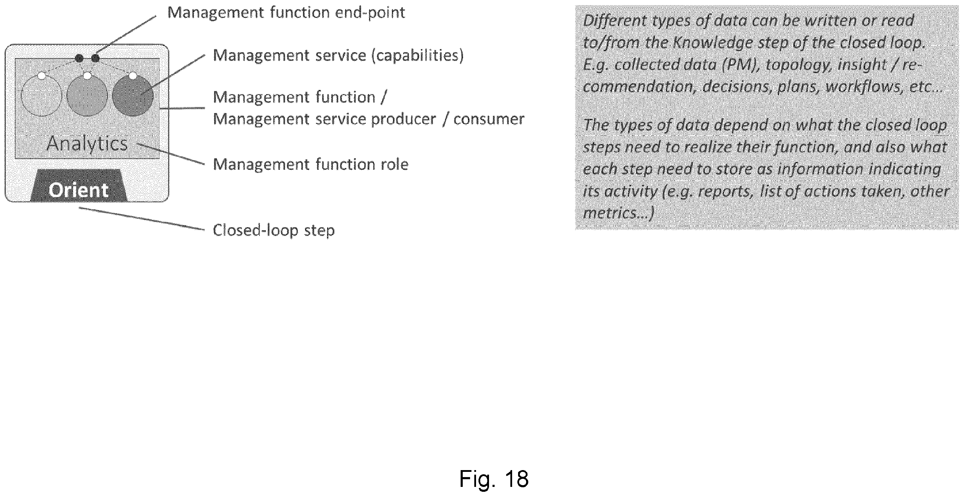

Figure 17 is a schematic diagram illustrating management functions in a closed control loops architecture. Figure 18 is a schematic diagram illustrating details of a management function of Figure 17.

The concept of closed control loops as illustrated in Figures 17 and 18 including observe, orient, decide, and act (OODA) is well described in e.g. European Telecommunications Standards Institute (ETSI) ISG ZSM specification ZSM002.

In order to implement the ML model management and execute the ML workflow as devised by O-RAN and summarized above, a couple of issues is to be addressed, namely
- how to implement training host (TH)/inference host (IH) functions for (r/x)Apps without disclosing the ML model details to a third party,
- investigating what standardization support would be needed for an O-RAN based deployment scenario (e.g., TH in Non-RT RIC, IH in Near-RT RIC) in order to support the desired level of multi-vendor integration and interoperability, and
- resolving the fact that rApps and xApps (terminology specific to O-RAN, in 3GPP these entities may be seen as management functions in SA5 specifications and network functions in SA2 specifications; a concrete example of an SA2 network function impacted by this problem is the network data analytics function (NWDAF) in scenarios where the NWDAF is deployed in a distributed manner) are not tied together: they are supposed to run in an complex, distributed system with dynamic behavior and lack of coordination.

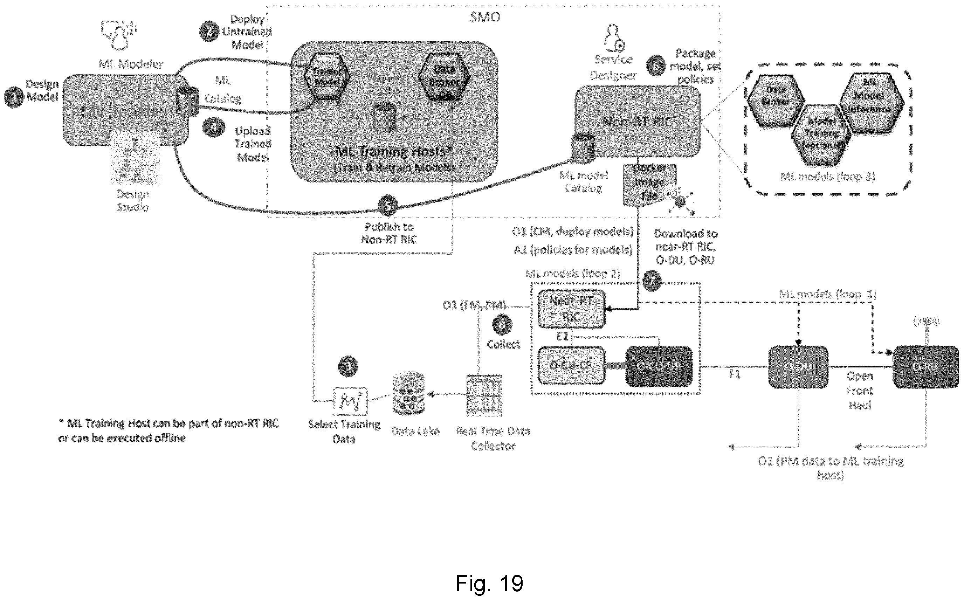

Figure 19 is a schematic diagram illustrating a machine learning model lifecycle, and in particular showing an example of a ML model lifecycle implementation included in the O-RAN WG2 AI/ML workflow technical report.

According thereto, the key phases involved in the design and deployment of an AI/ML application and its lifecycle in the O-RAN architecture are shown, but the schematic diagram of Figure 19 does not clearly elaborate on i) which entity triggers and controls the operations (RIC vs. Apps), ii) whether ML models are disclosed or not, and among which entities, and iii) dynamic/runtime aspects such as where and how many running instances need to be spawned. In other words, the schematic diagram of Figure 19 provides the context and hints about validity of the problem that example embodiments aim to solve.

Hence, the problem arises that applications potentially including machine learning models and other vendor specific information are to be deployed in cloud environments without revealing the machine learning models and other vendor specific information to arbitrary other parties.

Hence, there is a need to provide for distributed coordinated management of machine learning models and applications.

### Summary

Various example embodiments aim at addressing at least part of the above issues and/or problems and drawbacks.

Various aspects of example embodiments are set out in the appended claims.

According to an exemplary aspect, there is provided a method of a controller function entity, the method comprising receiving, from an orchestrating entity, a deployment instruction instructing deployment of a controller functionality, and deploying said controller functionality, wherein in relation to said controller functionality, the method further comprises receiving, from said orchestrating entity, information on a goal related to network performance of a network portion, and transmitting, based on said goal, towards at least one first controlled function entity, a deployment instruction instructing deployment of at least one first controlled functionality.

According to an exemplary aspect, there is provided an apparatus of a controller function entity, the apparatus comprising receiving circuitry configured to receive, from an orchestrating entity, a deployment instruction instructing deployment of a controller functionality, and deploying circuitry configured to deploy said controller functionality, wherein in relation to said controller functionality, the apparatus further comprises receiving circuitry configured to receive, from said orchestrating entity, information on a goal related to network performance of a network portion, and transmitting circuitry configured to transmit, based on said goal, towards at least one first controlled function entity, a deployment instruction instructing deployment of at least one first controlled functionality.

According to an exemplary aspect, there is provided an apparatus of a controller function entity, the apparatus comprising at least one processor, at least one memory including computer program code, and at least one interface configured for communication with at least another apparatus, the at least one processor, with the at least one memory and the computer program code, being configured to cause the apparatus to perform receiving, from an orchestrating entity, a deployment instruction instructing deployment of a controller functionality, and deploying said controller functionality, wherein in relation to said controller functionality, the at least one processor, with the at least one memory and the computer program code, being configured to cause the apparatus to perform receiving, from said orchestrating entity, information on a goal related to network performance of a network portion, and transmitting, based on said goal, towards at least one first controlled function entity, a deployment instruction instructing deployment of at least one first controlled functionality.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient control and distribution of applications in the context of machine learning models without revealing sensible information on e.g. the machine learning models to thereby solve at least part of the problems and drawbacks identified in relation to the prior art.

By way of example embodiments, there is provided distributed coordinated management of machine learning models and applications. More specifically, by way of example embodiments, there are provided measures and mechanisms for realizing distributed coordinated management of machine learning models and applications.

Thus, improvement is achieved by methods, apparatuses and computer program products enabling/realizing distributed coordinated management of machine learning models and applications.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a block diagram illustrating an apparatus according to example embodiments,
Figure 6 is a block diagram illustrating an apparatus according to example embodiments,
Figure 7 is a block diagram illustrating an apparatus according to example embodiments,
Figure 8 is a block diagram illustrating an apparatus according to example embodiments,
Figure 9 is a block diagram illustrating an apparatus according to example embodiments,
Figure 10 is a block diagram illustrating an apparatus according to example embodiments,
Figure 11 is a schematic diagram of a procedure according to example embodiments,
Figure 12 is a schematic diagram of a procedure according to example embodiments,
Figure 13 is a schematic diagram of a procedure according to example embodiments,
Figure 14 is a schematic diagram of a procedure according to example embodiments,
Figure 15 is a schematic diagram of a procedure according to example embodiments,
Figure 16 is a schematic diagram illustrating a logical architecture of open radio access network,
Figure 17 is a schematic diagram illustrating management functions in a closed control loops architecture,
Figure 18 is a schematic diagram illustrating details of a management function of Figure 17,
Figure 19 is a schematic diagram illustrating a machine learning model lifecycle,
Figure 20 is a schematic diagram illustrating a distributed application deployment process according to example embodiments,
Figure 21 (Figures 21A and 21B) shows a schematic diagram of signaling sequences according to example embodiments,
Figure 22 (Figures 22A and 22B) shows a schematic diagram of signaling sequences according to example embodiments, and
Figure 23 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP or ETSI specifications or O-RAN related specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) distributed coordinated management of machine learning models and applications.

As mentioned above, Figure 17 is a schematic diagram illustrating management functions in a closed control loops architecture. Figure 18 is a schematic diagram illustrating details of a management function of Figure 17. The specific "building blocks" of OODA targeted by example embodiments are "Orient" and "Decide". Here, seeing example embodiments and in particular the disclosed processes from the OODA perspective helps to understand its context.

Example embodiments are explained and described using O-RAN specific terminology (e.g. SMO, xApp, rApp), however, the disclosed principles are not limited to such scenario. Instead, the same/similar behaviour explained and described using O-RAN specific terminology may be implemented by any generic functions acting in a coordinated/cooperative manner. In particular, according to example embodiments, the SMO functionality may be implemented by any kind of "actor" entity, "orchestrator" entity, "service consumer" entity, or similar. The rApp and xApp functionalities may be implemented by any kind of "function" entity, "network function" entity, "management function" entity, "service producer" entity, "application" entity, or similar.

Example embodiments are outlined below.

In particular, according to example embodiments, an ensemble of "Smart Apps" (smart applications, applications) is provided that operate in a self-coordinated way to perform their task in an optimal way by spawning new threads (e.g., xApps/rApps) in the environment where they fit better - near data sources and devices under control (e.g., in the Near-RT RIC) with limited/scarce resources (which probably implies light-weight highly optimized xApps) and/or near large resource pools and with broader scope (e.g., in the Non-RT RIC).

According to example embodiments, primarily, available deployment options (such as edge cloud, central cloud, affinity to particular data sources, service producers/consumers, etc...) are identified and evaluated, followed by an optimal decision implemented as a "Smart App" deployment action.

In so doing, the ML model is never exposed to third parties, as the ML model is "packaged" within the classifier code that executes it, i.e., data comes in, analysis/decisions come out; in this regard, the (r/x)App acts as a "black box".

While being an implemented feature, at the same time, this also represents an advantageous behavior directly addressing at least part of the vital problems and drawbacks identified in relation to the prior art by avoiding the reveal of sensible information on e.g. the machine learning models.

Example embodiments can be summarized with the following steps:
1. Receiving a "goal" by the head of ensemble application,
2. Evaluating the available deployment options and selecting the optimal deployment scenario,
3. Deploying a set of "data collection agents" (xApps) by the head (of ensemble) application,
4. Receiving the data from "data collection agents" and training a ML model by the head (of ensemble) application,
5. Upon successful ML model training, generating an "analytics app", i.e., packaged with classifier code, trained model, and potentially imperative policy prescribing actions based on the classifier outputs,
6. Deploying said generated "analytics app" as xApps and reconfiguring "data collection agents" to feed the data into the "analytics app", and
7. Monitoring the deployed OODA control loop ("data collection agents" xApp, "analytics" xApp, actions policy) and modifying its behavior (e.g. by changing the individual xApps deployed under the rApp control).

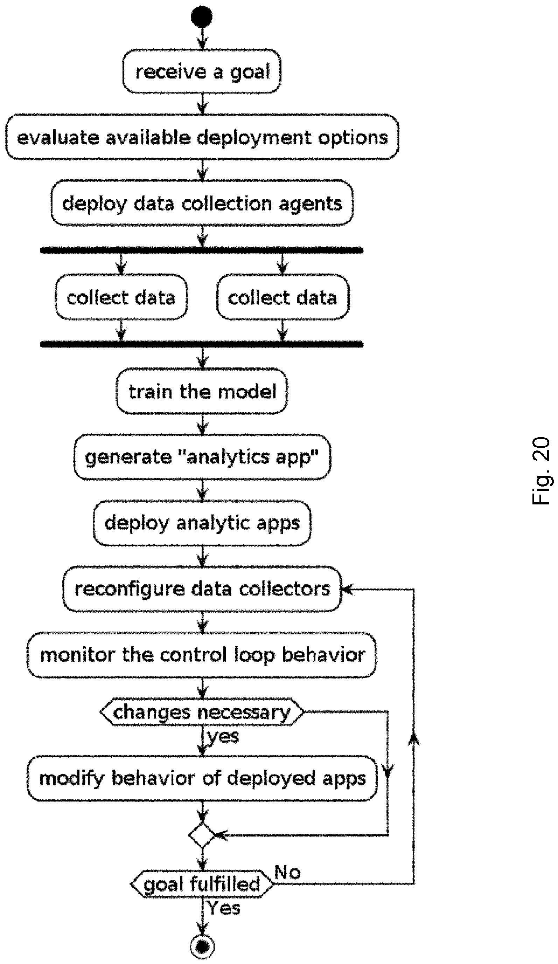

Figure 20 is a schematic diagram illustrating a distributed application deployment process according to example embodiments.

That is, illustrating the summary in more detail, according to example embodiments as illustrated in Figure 20, a goal is received, available deployment options are evaluated, data collection agents are deployed (based on the evaluation), and the data collection agents collect data.

Further, according to example embodiments as illustrated in Figure 20, a model is trained (based on the collected data), an analytics application is generated (potentially including the trained model), the analytics application is deployed, and the data collectors are reconfigured (at least to provide the collected data to the analytics application).

Further, according to example embodiments as illustrated in Figure 20, the control loop behavior is monitored, and based thereon, it is decided whether changes are necessary. If so, the behavior of the deployed application(s) is modified accordingly.

Further, according to example embodiments as illustrated in Figure 20, it is checked whether the initially received goal is fulfilled. If so, the distributed application deployment process according to example embodiments ends. If not, the data collectors are reconfigured again and the subsequent processing is repeated until the initially received goal is eventually fulfilled.

Additional/alternative flows supported by example embodiments include, but are not limited to the interaction between an xApp deployed at the Edge cloud with limited resources and the head of the ensemble application with an aim to offload/delegate resource-demanding tasks to the (new) instances of application(s) deployed in the environment less constrained by the resources availability and/or cost.

Example embodiments are explained below in more detail.

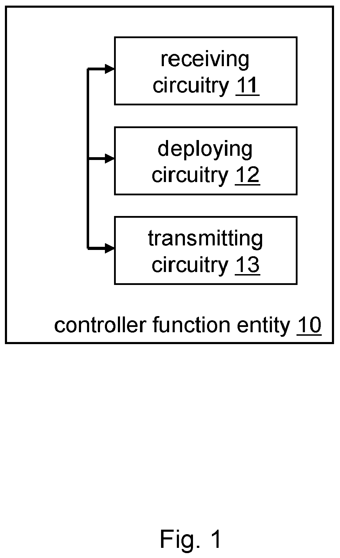

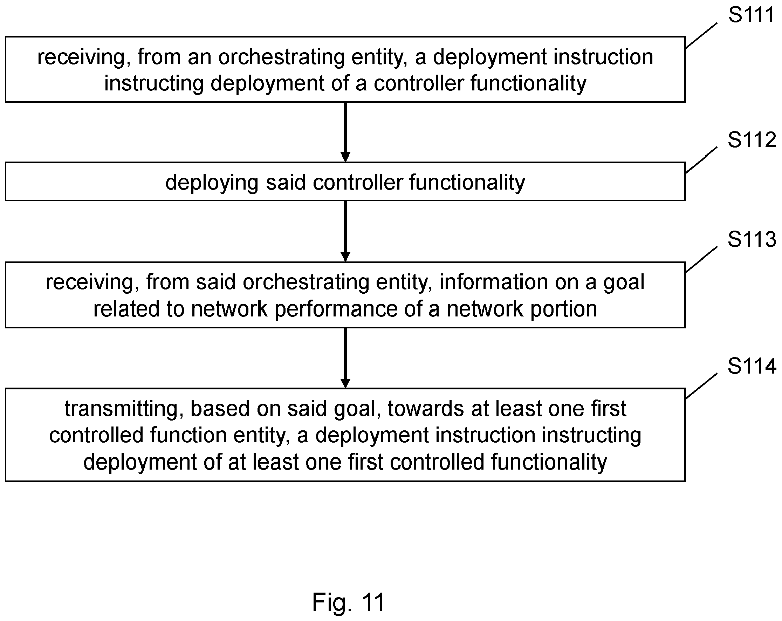

Figure 1 is a block diagram illustrating an apparatus according to example embodiments. The apparatus may be a network node or entity 10 such as a function entity (e.g. a controller function entity such as a CL Controller/ML Trainer entity or Classifier entity) comprising a receiving circuitry 11, a deploying circuitry 12, and a transmitting circuitry 13. The receiving circuitry 11 receives, from an orchestrating entity, a deployment instruction instructing deployment of a controller functionality. The deploying circuitry 12 deploys said controller functionality. Here, in relation to said controller functionality, the receiving circuitry 11 (or an additional receiving circuitry) receives, from said orchestrating entity, information on a goal related to network performance of a network portion, and the transmitting circuitry 13 transmits, based on said goal, towards at least one first controlled function entity, a deployment instruction instructing deployment of at least one first controlled functionality. Figure 11 is a schematic diagram of a procedure according to example embodiments. The apparatus according to Figure 1 may perform the method of Figure 11 but is not limited to this method. The method of Figure 11 may be performed by the apparatus of Figure 1 but is not limited to being performed by this apparatus.

As shown in Figure 11, a procedure according to example embodiments comprises an operation of receiving (Sill), from an orchestrating entity, a deployment instruction instructing deployment of a controller functionality, and an operation of deploying (S112) said controller functionality, wherein in relation to said controller functionality, the procedure according to example embodiments comprises an operation of receiving (S113), from said orchestrating entity, information on said goal, and an operation of transmitting (S114), based on said goal, towards at least one first controlled function entity, a deployment instruction instructing deployment of at least one first controlled functionality.

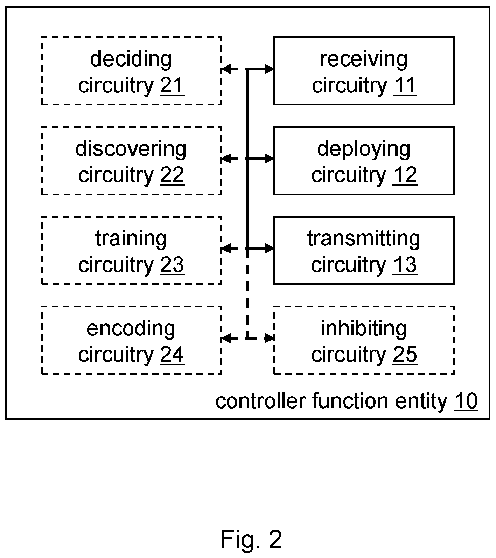

Figure 2 is a block diagram illustrating an apparatus according to example embodiments. In particular, Figure 2 illustrates a variation of the apparatus shown in Figure 1. The apparatus according to Figure 2 may thus further comprise a deciding circuitry 21, a discovering circuitry 22, a training circuitry 23, an encoding circuitry 24, and/or an inhibiting circuitry 25.

In an embodiment, at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 11, exemplary additional operations are given, which are inherently independent from each other as such. According to such variation, an exemplary method according to example embodiments may comprise, in relation to said controller functionality, an operation of deciding, based on said goal, on a deployment scheme of controlled functionalities including said at least one first controlled functionality.

According to a variation of the procedure shown in Figure 11, exemplary additional operations are given, which are inherently independent from each other as such. According to such variation, an exemplary method according to example embodiments may comprise, in relation to said controller functionality, an operation of discovering, based on said goal, a network environment for possible deployments of said controlled functionalities including said at least one first controlled functionality. Here, said deciding is based on a result of said discovering.

According to further example embodiments, said deployment scheme comprises an allocation of a plurality of controlled functionalities including said at least one first controlled functionality to a plurality of controlled function entities including said at least one first controlled function entity, respectively.

According to a variation of the procedure shown in Figure 11, exemplary additional operations are given, which are inherently independent from each other as such. According to such variation, an exemplary method according to example embodiments may comprise, in relation to said controller functionality, an operation of transmitting, towards said at least one first controlled function entity, a data collection instruction instructing data collection from a respective data source.

According to a variation of the procedure shown in Figure 11, exemplary additional operations are given, which are inherently independent from each other as such. According to such variation, an exemplary method according to example embodiments may comprise, in relation to said controller functionality, an operation of receiving, from said at least one first controlled function entity, collected data from said respective data source, and an operation of training a machine learning model related to said goal based on said collected data.

According to a variation of the procedure shown in Figure 11, exemplary additional operations are given, which are inherently independent from each other as such. According to such variation, an exemplary method according to example embodiments may comprise, in relation to said controller functionality, an operation of transmitting, towards said orchestrating entity, an indication that a machine learning model training related to said goal is completed.

According to a variation of the procedure shown in Figure 11, exemplary additional operations are given, which are inherently independent from each other as such. According to such variation, an exemplary method according to example embodiments may comprise, in relation to said controller functionality, an operation of encoding said machine learning model into a machine learning model inferencing instruction, and an operation of transmitting, based on said goal, towards a second controlled function entity, a deployment instruction instructing deployment of a second controlled functionality. Here, said deployment instruction instructing deployment of said second controlled functionality includes said machine learning model inferencing instruction for said second controlled functionality.

According to a variation of the procedure shown in Figure 11, exemplary additional operations are given, which are inherently independent from each other as such. According to such variation, an exemplary method according to example embodiments may comprise, in relation to said controller functionality, an operation of transmitting, towards said at least one first controlled function entity, a data collection modification instruction instructing said second controlled functionality as a new addressee of collected data from said respective data source.

According to a variation of the procedure shown in Figure 11, exemplary additional operations are given, which are inherently independent from each other as such. According to such variation, an exemplary method according to example embodiments may comprise, in relation to said controller functionality, an operation of transmitting, towards said orchestrating entity, an indication that a machine learning model deployment related to said goal is completed.

According to a variation of the procedure shown in Figure 11, exemplary additional operations are given, which are inherently independent from each other as such. According to such variation, an exemplary method according to example embodiments may comprise, in relation to said controller functionality, an operation of receiving, from said second controlled function entity, machine learning model inferencing results.

According to a variation of the procedure shown in Figure 11, exemplary additional operations are given, which are inherently independent from each other as such. According to such variation, an exemplary method according to example embodiments may comprise, in relation to said controller functionality, an operation of transmitting, towards said at least one first controlled function entity, a data collection modification instruction modifying said data collection instruction.

Alternatively, or in addition, according to a variation of the procedure shown in Figure 11, exemplary additional operations are given, which are inherently independent from each other as such. According to such variation, an exemplary method according to example embodiments may comprise, in relation to said controller functionality, an operation of transmitting, towards said second controlled function entity, a machine learning model inferencing modification instruction modifying said machine learning model inferencing instruction for said second controlled functionality.

Alternatively, or in addition, according to a variation of the procedure shown in Figure 11, exemplary additional operations are given, which are inherently independent from each other as such. According to such variation, an exemplary method according to example embodiments may comprise, in relation to said controller functionality, an operation of transmitting, towards said orchestrating entity, an indication that said machine learning model deployment related to said goal is modified.

According to a variation of the procedure shown in Figure 11, exemplary additional operations are given, which are inherently independent from each other as such. According to such variation, an exemplary method according to example embodiments may comprise, in relation to said controller functionality, an operation of deciding, based on said goal, whether a machine learning model related to said goal is to be re-trained.

According to a variation of the procedure shown in Figure 11, exemplary additional operations are given, which are inherently independent from each other as such. According to such variation, an exemplary method according to example embodiments may comprise, in relation to said controller functionality, an operation of transmitting, based on a result of said deciding, towards a third controlled function entity, a request for re-training of said machine learning model related to said goal.

According to a variation of the procedure shown in Figure 11, exemplary additional operations are given, which are inherently independent from each other as such. According to such variation, an exemplary method according to example embodiments may comprise, in relation to said controller functionality, an operation of receiving, from said third controlled function entity, information on a re-trained machine learning model related to said goal.

According to a variation of the procedure shown in Figure 11, exemplary additional operations are given, which are inherently independent from each other as such. According to such variation, an exemplary method according to example embodiments may comprise, in relation to said controller functionality, an operation of transmitting, towards said orchestrating entity, an indication that an updated machine learning model related to said goal is received.

According to a variation of the procedure shown in Figure 11, exemplary additional operations are given, which are inherently independent from each other as such. According to such variation, an exemplary method according to example embodiments may comprise, in relation to said controller functionality, an operation of inhibiting transfer of said machine learning model towards said orchestrating entity.

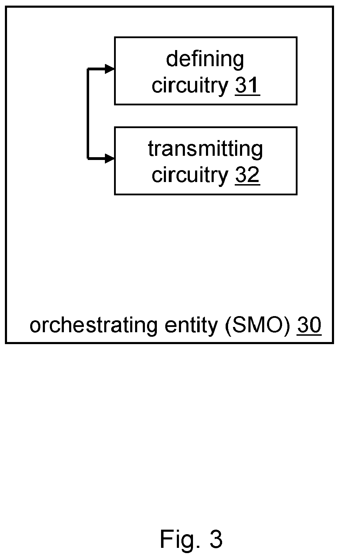

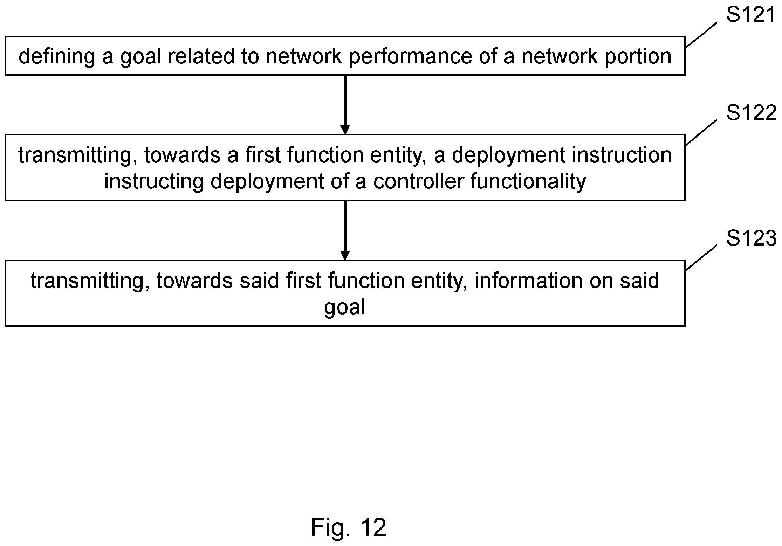

Figure 3 is a block diagram illustrating an apparatus according to example embodiments. The apparatus may be a network node or entity 30 such as a function entity (e.g. an orchestrating entity such as an SMO entity) comprising a defining circuitry 31 and a transmitting circuitry 32. The defining circuitry 31 defines a goal related to network performance of a network portion. The transmitting circuitry 32 transmits, towards a first function entity, a deployment instruction instructing deployment of a controller functionality. Further, the transmitting circuitry 32 transmits, towards said first function entity, information on said goal. Figure 12 is a schematic diagram of a procedure according to example embodiments. The apparatus according to Figure 3 may perform the method of Figure 12 but is not limited to this method. The method of Figure 12 may be performed by the apparatus of Figure 3 but is not limited to being performed by this apparatus.

As shown in Figure 12, a procedure according to example embodiments comprises an operation of defining (S121) a goal related to network performance of a network portion, an operation of transmitting (S122), towards a first function entity, a deployment instruction instructing deployment of a controller functionality, and an operation of transmitting (S123), towards said first function entity, information on said goal.

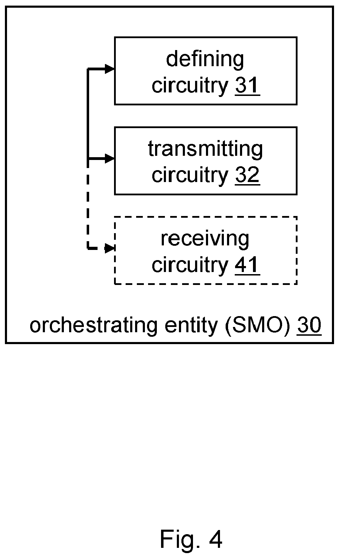

Figure 4 is a block diagram illustrating an apparatus according to example embodiments. In particular, Figure 4 illustrates a variation of the apparatus shown in Figure 3. The apparatus according to Figure 4 may thus further comprise a receiving circuitry 41.

In an embodiment, at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to a variation of the procedure shown in Figure 12, exemplary additional operations are given, which are inherently independent from each other as such. According to such variation, an exemplary method according to example embodiments may comprise an operation of receiving, from said first function entity, an indication that a machine learning model training related to said goal is completed.

According to a variation of the procedure shown in Figure 12, exemplary additional operations are given, which are inherently independent from each other as such. According to such variation, an exemplary method according to example embodiments may comprise an operation of receiving, from said first function entity, an indication that a machine learning model deployment related to said goal is completed.

According to a variation of the procedure shown in Figure 12, exemplary additional operations are given, which are inherently independent from each other as such. According to such variation, an exemplary method according to example embodiments may comprise an operation of receiving, from said first function entity, an indication that said machine learning model deployment related to said goal is modified.

According to a variation of the procedure shown in Figure 12, exemplary additional operations are given, which are inherently independent from each other as such. According to such variation, an exemplary method according to example embodiments may comprise an operation of transmitting, towards a second function entity, a deployment instruction instructing deployment of a controlled functionality.

According to a variation of the procedure shown in Figure 12, exemplary additional operations are given, which are inherently independent from each other as such. According to such variation, an exemplary method according to example embodiments may comprise an operation of receiving, from said first function entity, an indication that an updated machine learning model related to said goal is received.

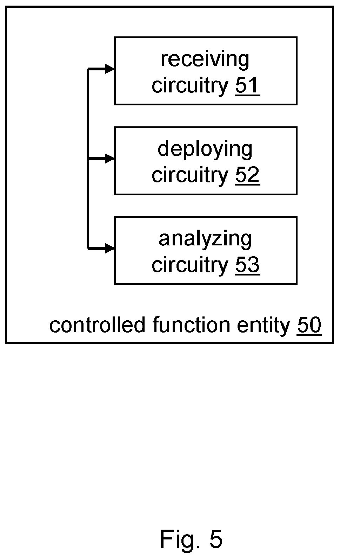

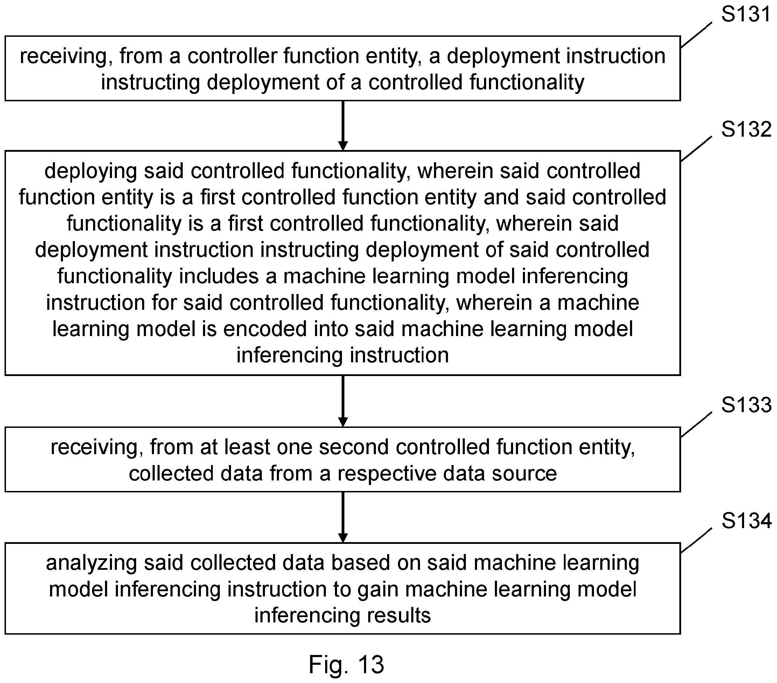

Figure 5 is a block diagram illustrating an apparatus according to example embodiments. The apparatus may be a network node or entity 50 such as a function entity (e.g. a controlled function entity such as a Classifier entity) comprising a receiving circuitry 51, a deploying circuitry 52, and an analyzing circuitry 53. The receiving circuitry 51 receives, from a controller function entity, a deployment instruction instructing deployment of a controlled functionality. The deploying circuitry 52 deploys said controlled functionality. Here, said controlled function entity is a first controlled function entity and said controlled functionality is a first controlled functionality, and said deployment instruction instructing deployment of said controlled functionality includes a machine learning model inferencing instruction for said controlled functionality, wherein a machine learning model is encoded into said machine learning model inferencing instruction. Further, in relation to said controlled functionality, the receiving circuitry 51 (or an additional receiving circuitry) receives, from at least one second controlled function entity, collected data from a respective data source, and the analyzing circuitry 53 analyzes said collected data based on said machine learning model inferencing instruction to gain machine learning model inferencing results. Figure 13 is a schematic diagram of a procedure according to example embodiments. The apparatus according to Figure 5 may perform the method of Figure 13 but is not limited to this method. The method of Figure 13 may be performed by the apparatus of Figure 5 but is not limited to being performed by this apparatus.

As shown in Figure 13, a procedure according to example embodiments comprises an operation of receiving (S131), from a controller function entity, a deployment instruction instructing deployment of a controlled functionality, and an operation of deploying (S132) said controlled functionality. Here, said controlled function entity is a first controlled function entity and said controlled functionality is a first controlled functionality, and said deployment instruction instructing deployment of said controlled functionality includes a machine learning model inferencing instruction for said controlled functionality, wherein a machine learning model is encoded into said machine learning model inferencing instruction. In relation to said controlled functionality, the procedure according to example embodiments comprises an operation of receiving (S133), from at least one second controlled function entity, collected data from a respective data source, and an operation of analyzing (S134) said collected data based on said machine learning model inferencing instruction to gain machine learning model inferencing results.

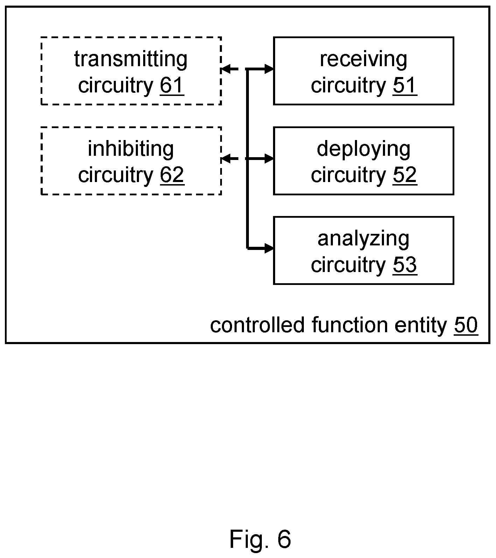

Figure 6 is a block diagram illustrating an apparatus according to example embodiments. In particular, Figure 6 illustrates a variation of the apparatus shown in Figure 5. The apparatus according to Figure 6 may thus further comprise a transmitting circuitry 61, and/or an inhibiting circuitry 62.

In an embodiment, at least some of the functionalities of the apparatus shown in Figure 5 (or 6) may be shared between two physically separate devices forming one operational entity. Therefore, the apparatus may be seen to depict the operational entity comprising one or more physically separate devices for executing at least some of the described processes.

According to a variation of the procedure shown in Figure 13, exemplary additional operations are given, which are inherently independent from each other as such. According to such variation, an exemplary method according to example embodiments may comprise, in relation to said controlled functionality, an operation of transmitting, towards said controller function entity, said machine learning model inferencing results.

According to a variation of the procedure shown in Figure 13, exemplary additional operations are given, which are inherently independent from each other as such. According to such variation, an exemplary method according to example embodiments may comprise, in relation to said controlled functionality, an operation of receiving, from said controller function entity, a machine learning model inferencing modification instruction modifying said machine learning model inferencing instruction for said controlled functionality.

According to a variation of the procedure shown in Figure 13, exemplary additional operations are given, which are inherently independent from each other as such. According to such variation, an exemplary method according to example embodiments may comprise, in relation to said controlled functionality, an operation of inhibiting transfer of said machine learning model towards an orchestrating entity.

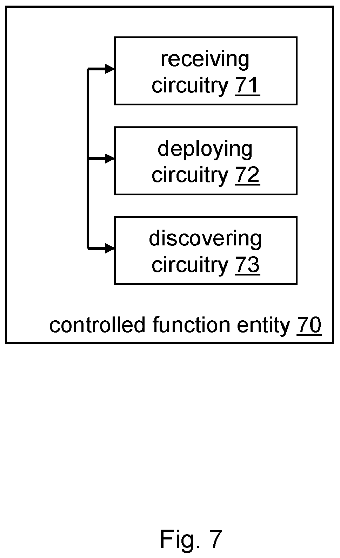

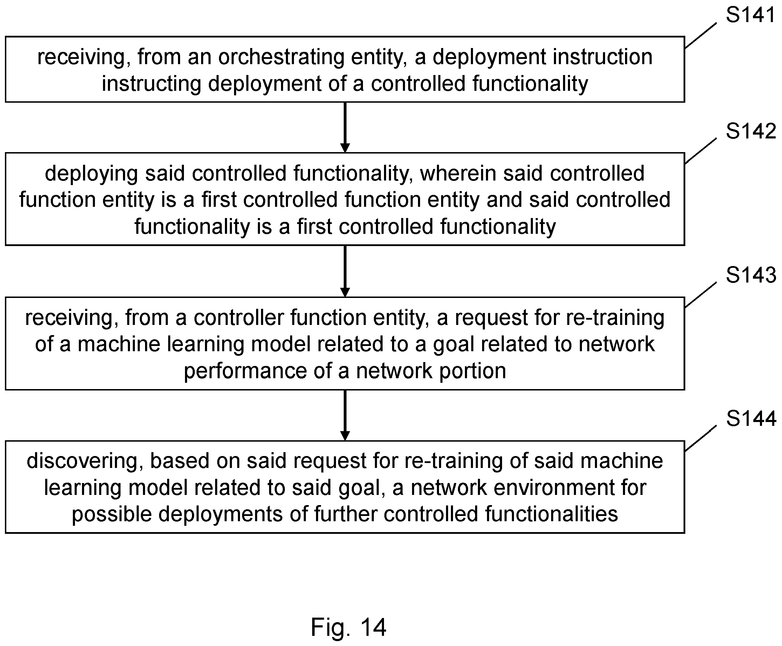

Figure 7 is a block diagram illustrating an apparatus according to example embodiments. The apparatus may be a network node or entity 70 such as a function entity (e.g. a controlled function entity such as an ML Trainer entity) comprising a receiving circuitry 71, a deploying circuitry 72, and a discovering circuitry 73. The receiving circuitry 71 receives, from an orchestrating entity, a deployment instruction instructing deployment of a controlled functionality. The deploying circuitry 72 deploys said controlled functionality. Here, said controlled function entity is a first controlled function entity and said controlled functionality is a first controlled functionality. Further, in relation to said controlled functionality, the receiving circuitry 71 (or an additional receiving circuitry) receives, from a controller function entity, a request for re-training of a machine learning model related to a goal related to network performance of a network portion, and the discovering circuitry 73 discovers, based on said request for re-training of said machine learning model related to said goal, a network environment for possible deployments of further controlled functionalities. Figure 14 is a schematic diagram of a procedure according to example embodiments. The apparatus according to Figure 7 may perform the method of Figure 14 but is not limited to this method. The method of Figure 14 may be performed by the apparatus of Figure 7 but is not limited to being performed by this apparatus.

As shown in Figure 14, a procedure according to example embodiments comprises an operation of receiving (S141), from an orchestrating entity, a deployment instruction instructing deployment of a controlled functionality, and an operation of deploying (S142) said controlled functionality. Here, said controlled function entity is a first controlled function entity and said controlled functionality is a first controlled functionality. In relation to said controlled functionality, the procedure according to example embodiments comprises an operation of receiving (S143), from a controller function entity, a request for re-training of a machine learning model related to a goal related to network performance of a network portion, and an operation of discovering (S144), based on said request for re-training of said machine learning model related to said goal, a network environment for possible deployments of further controlled functionalities.

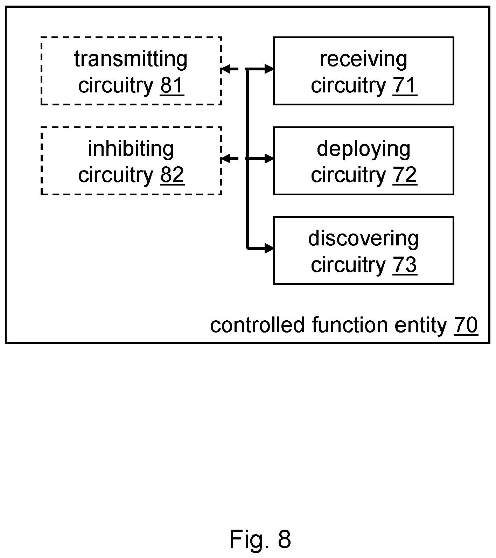

Figure 8 is a block diagram illustrating an apparatus according to example embodiments. In particular, Figure 8 illustrates a variation of the apparatus shown in Figure 7. The apparatus according to Figure 8 may thus further comprise a transmitting circuitry 81, and/or an inhibiting circuitry 82.

In an embodiment, at least some of the functionalities of the apparatus shown in Figure 7 (or 8) may be shared between two physically separate devices forming one operational entity. Therefore, the apparatus may be seen to depict the operational entity comprising one or more physically separate devices for executing at least some of the described processes.

According to a variation of the procedure shown in Figure 14, exemplary additional operations are given, which are inherently independent from each other as such. According to such variation, an exemplary method according to example embodiments may comprise, in relation to said controlled functionality, an operation of transmitting, towards a second controlled function entity a machine learning model training instruction instructing training of said machine learning model related to said goal based on collected data.

According to a variation of the procedure shown in Figure 14, exemplary additional operations are given, which are inherently independent from each other as such. According to such variation, an exemplary method according to example embodiments may comprise, in relation to said controlled functionality, an operation of transmitting, towards at least one third controlled function entity, a deployment instruction instructing deployment of at least one third controlled functionality, and an operation of transmitting, towards said at least one third controlled function entity, a data collection instruction instructing data collection from a respective data source.

According to a variation of the procedure shown in Figure 14, exemplary additional operations are given, which are inherently independent from each other as such. According to such variation, an exemplary method according to example embodiments may comprise, in relation to said controlled functionality, an operation of receiving, from said second controlled function entity, information on said machine learning model related to said goal trained.

According to a variation of the procedure shown in Figure 14, exemplary additional operations are given, which are inherently independent from each other as such. According to such variation, an exemplary method according to example embodiments may comprise, in relation to said controlled functionality, an operation of transmitting, towards said controller function entity, said information on said machine learning model related to said goal trained.

According to a variation of the procedure shown in Figure 14, exemplary additional operations are given, which are inherently independent from each other as such. According to such variation, an exemplary method according to example embodiments may comprise, in relation to said controlled functionality, an operation of inhibiting transfer of said machine learning model towards said orchestrating entity.

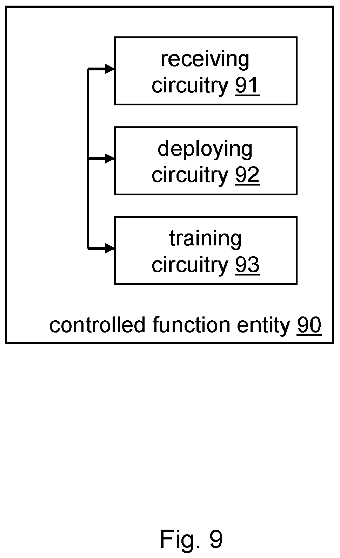

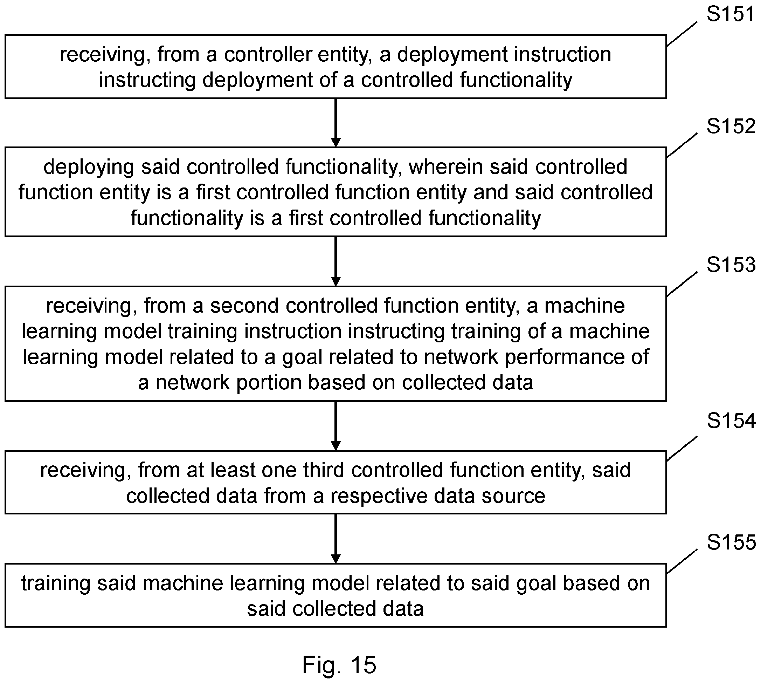

Figure 9 is a block diagram illustrating an apparatus according to example embodiments. The apparatus may be a network node or entity 90 such as a function entity (e.g. a controlled function entity such as an ML Training Task entity) comprising a receiving circuitry 91, a deploying circuitry 92, and a training circuitry 93. The receiving circuitry 91 receives, from a controller entity, a deployment instruction instructing deployment of a controlled functionality. The deploying circuitry 92 deploys said controlled functionality. Here, said controlled function entity is a first controlled function entity and said controlled functionality is a first controlled functionality. Further, in relation to said controlled functionality, the receiving circuitry 91 (or an additional receiving circuitry) receives, from a second controlled function entity, a machine learning model training instruction instructing training of a machine learning model related to a goal related to network performance of a network portion based on collected data, the receiving circuitry 91 (or an additional receiving circuitry) receives, from at least one third controlled function entity, said collected data from a respective data source, and the training circuitry 93 trains said machine learning model related to said goal based on said collected data. Figure 15 is a schematic diagram of a procedure according to example embodiments. The apparatus according to Figure 9 may perform the method of Figure 15 but is not limited to this method. The method of Figure 15 may be performed by the apparatus of Figure 9 but is not limited to being performed by this apparatus.

As shown in Figure 15, a procedure according to example embodiments comprises an operation of receiving (S151), from a controller entity, a deployment instruction instructing deployment of a controlled functionality, and an operation of deploying (S152) said controlled functionality. Here, said controlled function entity is a first controlled function entity and said controlled functionality is a first controlled functionality. Further, in relation to said controlled functionality, the procedure according to example embodiments comprises an operation of receiving (S153), from a second controlled function entity, a machine learning model training instruction instructing training of a machine learning model related to a goal related to network performance of a network portion based on collected data, an operation of receiving (S154), from at least one third controlled function entity, said collected data from a respective data source, and an operation of training (S155) said machine learning model related to said goal based on said collected data.

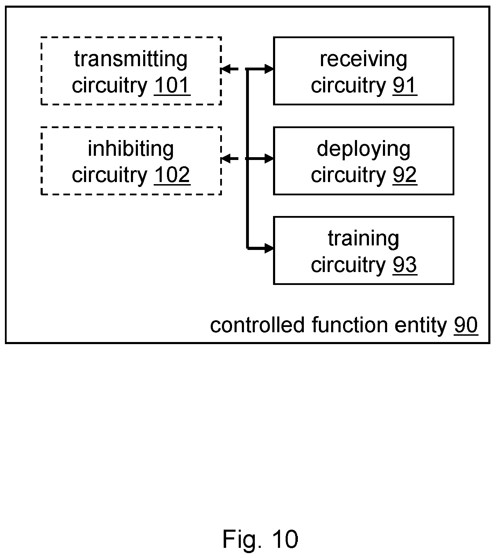

Figure 10 is a block diagram illustrating an apparatus according to example embodiments. In particular, Figure 10 illustrates a variation of the apparatus shown in Figure 9. The apparatus according to Figure 10 may thus further comprise a transmitting circuitry 101, and/or an inhibiting circuitry 102.

In an embodiment, at least some of the functionalities of the apparatus shown in Figure 9 (or 10) may be shared between two physically separate devices forming one operational entity. Therefore, the apparatus may be seen to depict the operational entity comprising one or more physically separate devices for executing at least some of the described processes.

According to a variation of the procedure shown in Figure 15, exemplary additional operations are given, which are inherently independent from each other as such. According to such variation, an exemplary method according to example embodiments may comprise, in relation to said controlled functionality, an operation of transmitting, towards said second controlled function entity, information on said machine learning model related to said goal trained.

According to a variation of the procedure shown in Figure 15, exemplary additional operations are given, which are inherently independent from each other as such. According to such variation, an exemplary method according to example embodiments may comprise, in relation to said controlled functionality, an operation of inhibiting transfer of said machine learning model towards an orchestrating entity.

Example embodiments as explained above are described below in mode specific terms.

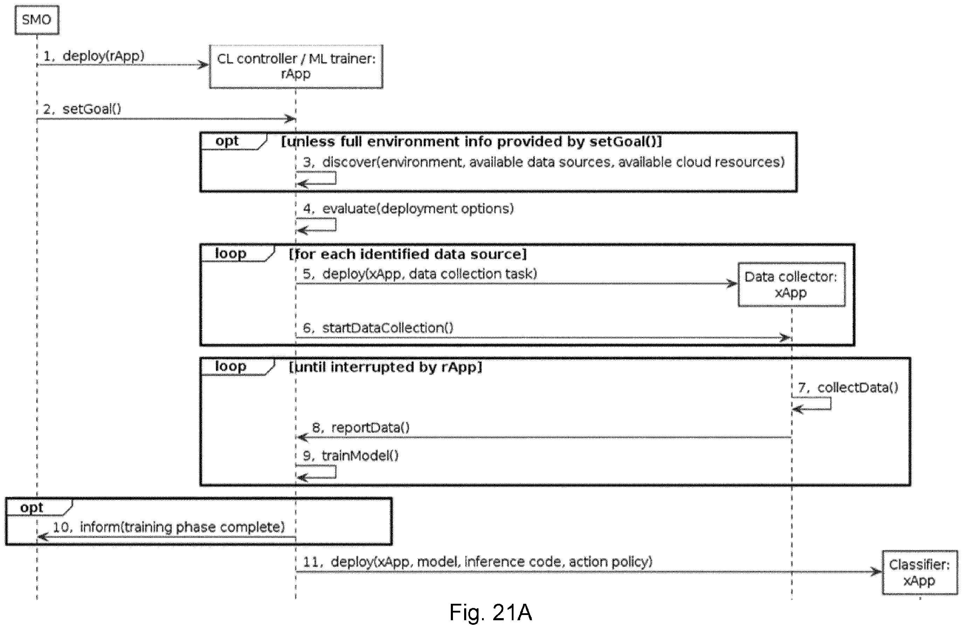

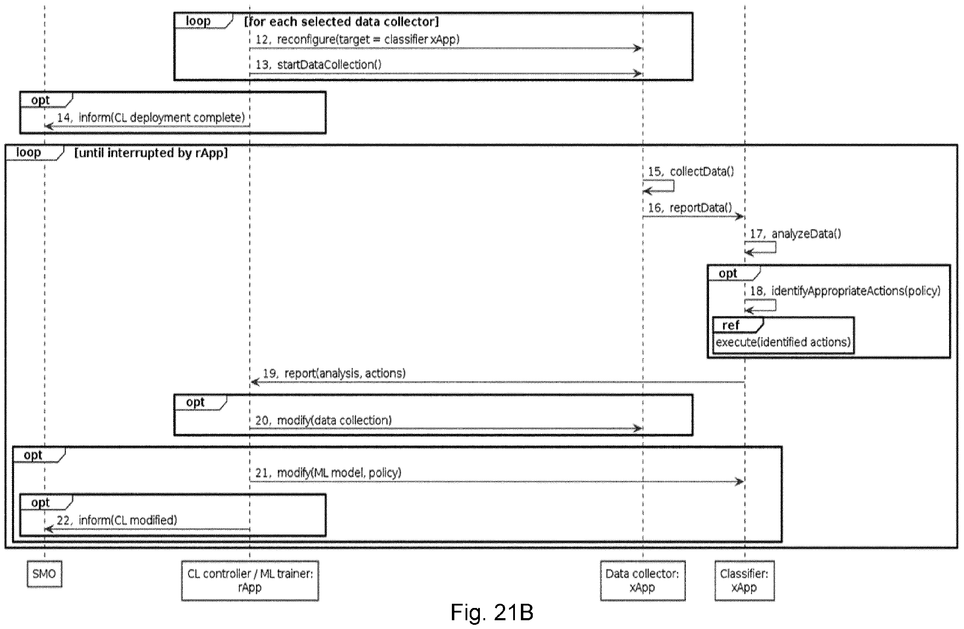

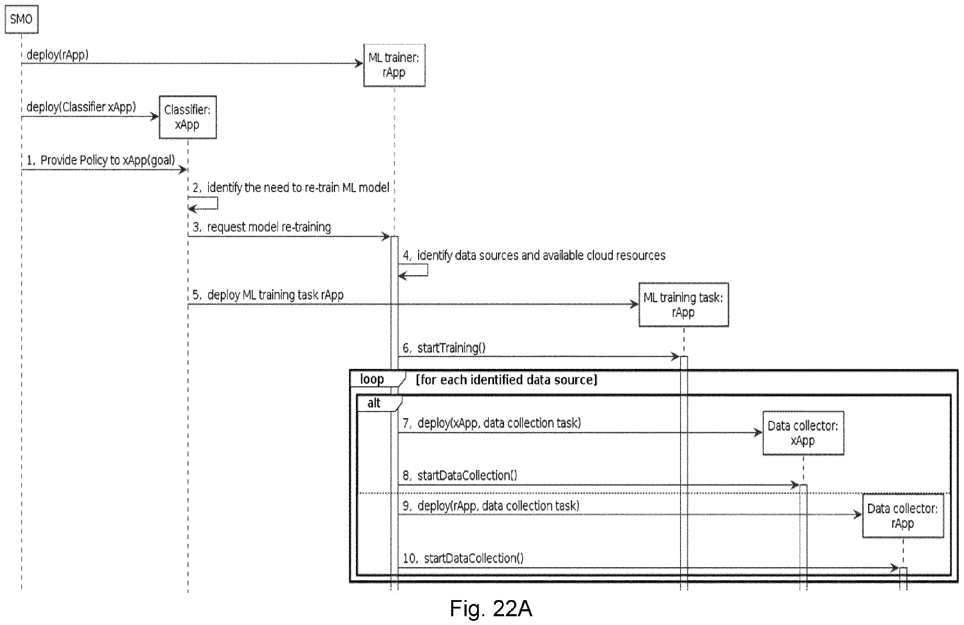

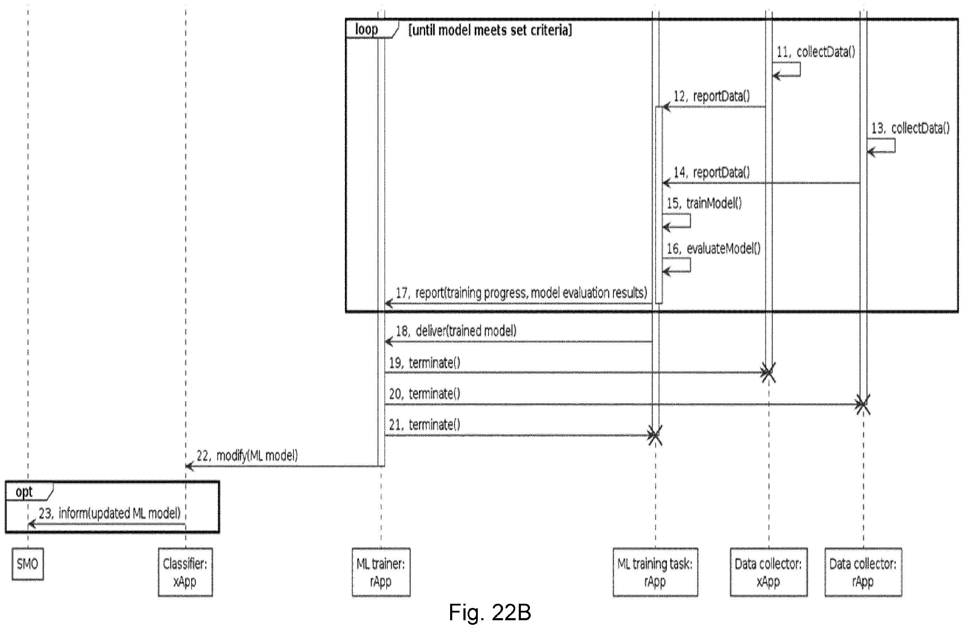

According to these example embodiments, coordinated interactions are performed by an ensemble of applications/functions, where one of the participating applications takes the "leader" role (head of ensemble application). In the example embodiments described using Figures 21A and 21B, this leader role is taken by a "CL Controller/ML Trainer" entity. In the example embodiments described using Figures 22A and 22B, this leader role is taken by a "Classifier" entity.

The application taking the leader role spawns/controls/coordinates "helper" applications. In the example embodiments described using Figures 21A and 21B, this helper role is taken by a "Data Collector" entity and a "Classifier" entity. In the example embodiments described using Figures 22A and 22B, this helper role is taken by an "ML Trainer" entity, an "ML Training Task" entity, and "Data Collector" entities.

According to example embodiments, the "helper" applications may perform activities different from data collection, classification, ML Training; however, the "leader" application according to example embodiments decides what, when and where needs to be done (the "leader" application according to example embodiments generates and follows an optimal deployment scenario).

Further, according to example embodiments, the AI/ML model (trained and used by the ensemble) is never disclosed to the entities outside the ensemble; for the model training and execution purposes, the "leader" application creates a trusted "helper" application which combines the model with its execution/training code.

Figures 21A and 21B show a schematic diagram of signaling sequences according to example embodiments. Here, it is noted that the sequence illustrated in Figure 21B directly follows the sequence illustrated in Figure 21A, i.e., Figure 21B represents a continuation of Figure 21A.

The example embodiments illustrated in Figure 21 (Figures 21A and 21B) are focused on both the ancillary role of xApps (as Data Collectors) as well as the primary role of xApps (as Classifiers/ML model executors/decision makers/actuators), with an rApp playing a light-weight orchestrator role illustrating a "top-down" approach.

In a step 1 of Figure 21, a trigger is sent from a higher level management entity (e.g., the SMO in the O-RAN context), bearing the instruction to deploy the head of ensemble application. Said application can be deployed as an rApp in the Non-RT RIC, which is envisioned as an environment with abundant resources. Said rApp performs ML model training and supervises the "worker bees" applications (i.e. helper application entities) running close to the data sources and areas where fast decisions need to be applied (CL Controller/ML Trainer rApp). According to example embodiments, multiple options are possible: Either the same rApp acts as CL Controller/Manager and as ML Trainer, or multiple dedicated rApps are instantiated.

In a step 2 of Figure 21, the head of ensemble rApp receives a "goal" which triggers the execution of the training process. According to example embodiments, such goal contains sufficient information to drive a decision on the rApps about where to run the companion data collector applications, and which data collection tasks they shall perform.

An optional step 3 of Figure 21 is performed to discover the computing capabilities of the environment, to enable task offload based on "best" access to the resources, under the assumption that running a heavy rApp is cheaper/easier.

In a step 4 of Figure 21, the head of the ensemble evaluates available deployment options and selects the optimal deployment scenario.

In a step 5 of Figure 21, based on the decision from the steps above, the head of ensemble rApp invokes the deployment of data collector applications and sends them the data collections tasks. According to example embodiments, this step can be executed by the first rApp (head of ensemble) which can produce/generate helm charts to generate pipelines dynamically at runtime.

In a step 6 of Figure 21, the head of ensemble rApp activates the data collection task. Steps 4 and 5 of Figure 21 are repeated for each data collector rApp deemed necessary after the decision in step 2 of Figure 21.

In steps 7 and 8 of Figure 21, the data collection xApp collects data and reports the collected data to the ML Trainer application, until it gets interrupted by the ML Trainer application.

In a step 9 of Figure 21, the ML Trainer application uses the received data to train the ML model, until a certain point is reached based on the goal received from step 2 of Figure 21.

In a step 10 of Figure 21, the ML Trainer application notifies the SMO that the training is over and optionally sends along a training report.

At this stage the inference process can start.

Accordingly, in a step 11 of Figure 21, the head of ensemble application triggers and deploys Classifier xApps containing trained models wrapped into inference layer.

In a step 12 of Figure 21, the head of ensemble application sends to each selected Data Collector a reconfiguration message to instruct them to send collected data to the Classifier xApp.

In a step 13 of Figure 21, the data collection job is invoked.

In an optional step 14 of Figure 21, the SMO can be notified that the ML-based CL deployment is completed.

Steps 15 to 22 are performed until a stop signal is issued by the CL Controller rApp.

In a step 15 of Figure 21, the Data Collectors collect data.

In a step 16 of Figure 21, the Data Collectors send data to the Classifier xApp.

In a step 17 of Figure 21, the Classifier application analyses the received data.

In an optional step 18 of Figure 21, appropriate actions are identified and taken by the xApps or by other entities based on the analysis performed by xApps.

In a step 19 of Figure 21, a report of the analysis and actions is sent to the ML Controller App.

In an optional step 20 of Figure 21, based on the received report, the ML Controller application may decide to reconfigure the data collection task and effect such modification.

In an optional step 21 of Figure 21, based on the received report, the ML Controller application may decide to reconfigure the Classifier application with a new instructions set and effect such modification.

Finally, in an optional step 22 of Figure 21, a notification on the modified parameters may be sent to the SMO.

Figure 22 (Figures 22A and 22B) shows a schematic diagram of signaling sequences according to example embodiments. Here, it is noted that the sequence illustrated in Figure 22B directly follows the sequence illustrated in Figure 22A, i.e., Figure 22B represents a continuation of Figure 22A.

The example embodiments illustrated in Figure 22 (Figures 22A and 22B) relate to an additional/alternative processing with respect to the example embodiments described using Figure 21 with interactions between an xApp deployed at the Edge cloud with limited resources and the head of the ensemble App with the aim to offload/delegate resource-demanding tasks to the (new) instances of applications deployed in the environment less constrained by the resources availability.

As already mentioned above, the example embodiments illustrated in Figure 22 are implemented utilizing the following actors:
- Classifier xApp: Primary application (head of ensemble),
- ML Trainer rApp: rApp providing generic ML training services,
- ML Training Task rApp: rApp dedicated to providing the training required by the "head of ensemble xApp", and
- Data Collector xApp: xApp providing generic data collection capabilities.

The processing illustrated in Figure 22 starts out with the preconditions that
- a generic ML Trainer rApp is already deployed, and that
- a trigger comes from a higher level management entity (e.g., the SMO in the O-RAN context), bearing the instruction to deploy the head of ensemble application. Said head of ensemble application can be deployed as an xApp in the Near-RT RIC. Said xApp performs ML model inference directly driving the fast decisions within the RAN Nodes. In the Figure 22 below, the head of ensemble application is implemented by a Classifier xApp.

In a step 1 of Figure 22, the head of ensemble xApp is provided with a specific goal.

In a step 2 of Figure 22, the head of ensemble xApp identifies a need to retrain the model.

In a step 3 of Figure 22, the head of ensemble xApp provides a specific ML Training Task rApp package to the ML Trainer rApp. This dedicated rApp will have the necessary keys to ensure secure data exchange with the head of ensemble xApp.

In a step 4 of Figure 22, the ML Trainer rApp identifies available resources and data sources and provides a list thereof.

In a step 5 of Figure 22, an ML Training Task rApp is deployed by the head of ensemble xApp.

In a step 6 of Figure 22, start of ML training is requested, and the ML training is started.

In a step 7 of Figure 22, a Data Collection xApp is deployed by ythe ML Trainer application.

In a step 8 of Figure 22, the data collection by the Data Collection xApp is started.

Alternatively, in a step 9 of Figure 22, a Data Collection rApp is deployed, and in a step 10 of Figure 22, the data collection by the Data Collection rApp is started.

Steps 11 to 17 are performed until the (re)trained ML model meets set criteria.

In a step 11 of Figure 22, the Data Collection xApp collects data.

In a step 12 of Figure 22, the Data Collection xApp sends the collected data to the ML Training Task application.

In a step 13 of Figure 22, the Data Collection rApp collects data.

In a step 14 of Figure 22, the Data Collection rApp sends the collected data to the ML Training Task application.

In a step 15 of Figure 22, the ML model is trained by the ML Training Task application.

In a step 16 of Figure 22, the ML model is evaluated by the ML Training Task application.

In a step 17 of Figure 22, the specific ML Training Task rApp sends progress updates to the generic ML Trainer rApp.

In a step 18 of Figure 22, the specific ML Training Task rApp sends the completed ML model to the ML Trainer rApp.

In steps 19, 20, and 21 of Figure 22, the ML Trainer rApp notifies the Data Collector xApp, the Data Collector rApp, and the ML Training Task rApp, respectively, to terminate.

In a step 22 of Figure 22, the updated ML model is provided to the head of ensemble xApp (i.e., Classifier application in the illustrated example).

In a step 23 of Figure 22, the head of ensemble xApp notifies the SMO that it has received an updated ML model.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

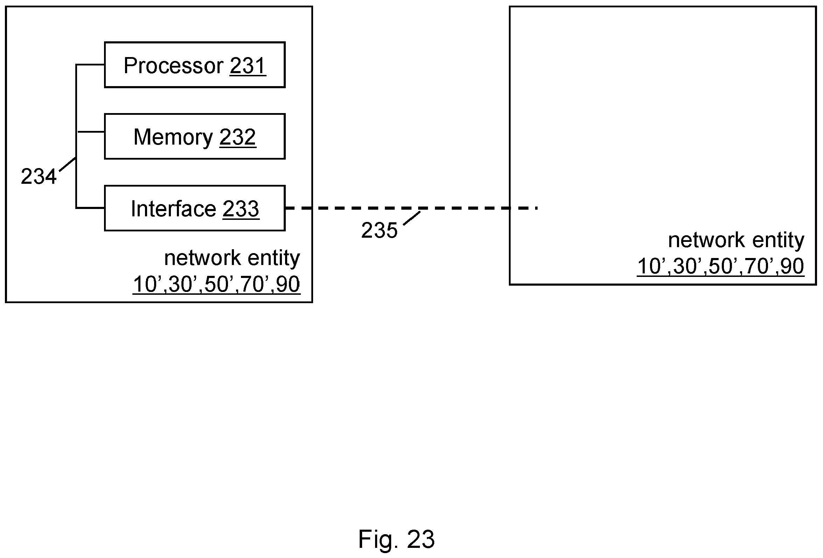

In Figure 23, an alternative illustration of apparatuses according to example embodiments is depicted. As indicated in Figure 23, according to example embodiments, the apparatus (network node or entity) 10', 30', 50', 70', 90' (corresponding to the network node or entity 10, 30, 50, 70, 90) comprises a processor 231, a memory 232 and an interface 233, which are connected by a bus 234 or the like. The apparatus 10', 30', 50', 70', 90' may be connected with other apparatuses, e.g. other apparatuses 10', 30', 50', 70', 90', via link 235, respectively.

The processor 231 and/or the interface 233 may also include a modem or the like to facilitate communication over a (hardwire or wireless) link, respectively. The interface 233 may include a suitable transceiver coupled to one or more antennas or communication means for (hardwire or wireless) communications with the linked or connected device(s), respectively. The interface 233 is generally configured to communicate with at least one other apparatus, i.e. the interface thereof.

The memory 232 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node or entity 10 comprises at least one processor 231, at least one memory 232 including computer program code, and at least one interface 233 configured for communication with at least another apparatus. The processor (i.e. the at least one processor 231, with the at least one memory 232 and the computer program code) is configured to perform receiving, from an orchestrating entity, a deployment instruction instructing deployment of a controller functionality (thus the apparatus comprising corresponding means for receiving), to perform deploying said controller functionality (thus the apparatus comprising corresponding means for deploying), and to, in relation to said controller functionality, perform receiving, from said orchestrating entity, information on a goal related to network performance of a network portion, and transmitting, based on said goal, towards at least one first controlled function entity, a deployment instruction instructing deployment of at least one first controlled functionality (thus the apparatus comprising corresponding means for transmitting).

According to example embodiments, an apparatus representing the network node or entity 30 comprises at least one processor 231, at least one memory 232 including computer program code, and at least one interface 233 configured for communication with at least another apparatus. The processor (i.e. the at least one processor 231, with the at least one memory 232 and the computer program code) is configured to perform defining a goal related to network performance of a network portion (thus the apparatus comprising corresponding means for defining), to perform transmitting, towards a first function entity, a deployment instruction instructing deployment of a controller functionality (thus the apparatus comprising corresponding means for transmitting), and to perform transmitting, towards said first function entity, information on said goal.

According to example embodiments, an apparatus representing the network node or entity 50 comprises at least one processor 231, at least one memory 232 including computer program code, and at least one interface 233 configured for communication with at least another apparatus. The processor (i.e. the at least one processor 231, with the at least one memory 232 and the computer program code) is configured to perform receiving, from a controller function entity, a deployment instruction instructing deployment of a controlled functionality (thus the apparatus comprising corresponding means for receiving), to perform deploying said controlled functionality (thus the apparatus comprising corresponding means for deploying), wherein said controlled function entity is a first controlled function entity and said controlled functionality is a first controlled functionality, wherein said deployment instruction instructing deployment of said controlled functionality includes a machine learning model inferencing instruction for said controlled functionality, and wherein a machine learning model is encoded into said machine learning model inferencing instruction, and to, in relation to said controlled functionality, perform receiving, from at least one second controlled function entity, collected data from a respective data source, and analyzing said collected data based on said machine learning model inferencing instruction to gain machine learning model inferencing results (thus the apparatus comprising corresponding means for analyzing).

According to example embodiments, an apparatus representing the network node or entity 70 comprises at least one processor 231, at least one memory 232 including computer program code, and at least one interface 233 configured for communication with at least another apparatus. The processor (i.e. the at least one processor 231, with the at least one memory 232 and the computer program code) is configured to perform receiving, from an orchestrating entity, a deployment instruction instructing deployment of a controlled functionality (thus the apparatus comprising corresponding means for receiving), to perform deploying said controlled functionality (thus the apparatus comprising corresponding means for deploying), wherein said controlled function entity is a first controlled function entity and said controlled functionality is a first controlled functionality, and to, in relation to said controlled functionality, perform receiving, from a controller function entity, a request for re-training of a machine learning model related to a goal related to network performance of a network portion, and discovering, based on said request for re-training of said machine learning model related to said goal, a network environment for possible deployments of further controlled functionalities (thus the apparatus comprising corresponding means for discovering).

According to example embodiments, an apparatus representing the network node or entity 90 comprises at least one processor 231, at least one memory 232 including computer program code, and at least one interface 233 configured for communication with at least another apparatus. The processor (i.e. the at least one processor 231, with the at least one memory 232 and the computer program code) is configured to perform receiving, from a controller entity, a deployment instruction instructing deployment of a controlled functionality (thus the apparatus comprising corresponding means for receiving), to perform deploying said controlled functionality (thus the apparatus comprising corresponding means for deploying), wherein said controlled function entity is a first controlled function entity and said controlled functionality is a first controlled functionality, and to, in relation to said controlled functionality, perform receiving, from a second controlled function entity, a machine learning model training instruction instructing training of a machine learning model related to a goal related to network performance of a network portion based on collected data, receiving, from at least one third controlled function entity, said collected data from a respective data source, and training said machine learning model related to said goal based on said collected data (thus the apparatus comprising corresponding means for training).

For further details regarding the operability/functionality of the individual apparatuses, reference is made to the above description in connection with any one of Figures 1 to 22, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for distributed coordinated management of machine learning models and applications. Such measures exemplarily comprise, at a controller function entity, receiving, from an orchestrating entity, a deployment instruction instructing deployment of a controller functionality, and deploying said controller functionality, wherein in relation to said controller functionality, the measures exemplarily further comprise receiving, from said orchestrating entity, information on a goal related to network performance of a network portion, and transmitting, based on said goal, towards at least one first controlled function entity, a deployment instruction instructing deployment of at least one first controlled functionality.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

The following aspects can be derived from the above description of embodiments.

According to a first aspect, a method of a controller function entity comprises receiving, from an orchestrating entity, a deployment instruction instructing deployment of a controller functionality, and deploying said controller functionality, wherein in relation to said controller functionality, the method further comprises receiving, from said orchestrating entity, information on a goal related to network performance of a network portion, and transmitting, based on said goal, towards at least one first controlled function entity, a deployment instruction instructing deployment of at least one first controlled functionality.

According to a second aspect, the method according to the first aspect, in relation to said controller functionality, further comprises deciding, based on said goal, on a deployment scheme of controlled functionalities including said at least one first controlled functionality.

According to a third aspect, the method according to the second aspect, in relation to said controller functionality, further comprises discovering, based on said goal, a network environment for possible deployments of said controlled functionalities including said at least one first controlled functionality, wherein said deciding is based on a result of said discovering.

According to a fourth aspect, in the method according to the second or third aspect, said deployment scheme comprises an allocation of a plurality of controlled functionalities including said at least one first controlled functionality to a plurality of controlled function entities including said at least one first controlled function entity, respectively.

According to a fifth aspect, the method according to any of the first to fourth aspects, in relation to said controller functionality, further comprises transmitting, towards said at least one first controlled function entity, a data collection instruction instructing data collection from a respective data source.

According to a sixth aspect, the method according to the fifth aspect, in relation to said controller functionality, further comprises receiving, from said at least one first controlled function entity, collected data from said respective data source, and training a machine learning model related to said goal based on said collected data.

According to a seventh aspect, the method according to the sixth aspect, in relation to said controller functionality, further comprises transmitting, towards said orchestrating entity, an indication that a machine learning model training related to said goal is completed.

According to an eighth aspect, the method according to the sixth or seventh aspect, in relation to said controller functionality, further comprises encoding said machine learning model into a machine learning model inferencing instruction, and transmitting, based on said goal, towards a second controlled function entity, a deployment instruction instructing deployment of a second controlled functionality, wherein said deployment instruction instructing deployment of said second controlled functionality includes said machine learning model inferencing instruction for said second controlled functionality.

According to a ninth aspect, the method according to the eighth aspect, in relation to said controller functionality, further comprises transmitting, towards said at least one first controlled function entity, a data collection modification instruction instructing said second controlled functionality as a new addressee of collected data from said respective data source.

According to a tenth aspect, the method according to the ninth aspect, in relation to said controller functionality, further comprises transmitting, towards said orchestrating entity, an indication that a machine learning model deployment related to said goal is completed.

According to an eleventh aspect, the method according to any of the eighth to tenth aspects, in relation to said controller functionality, further comprises receiving, from said second controlled function entity, machine learning model inferencing results.

According to a twelfth aspect, the method according to the eleventh aspect, in relation to said controller functionality, further comprises transmitting, towards said at least one first controlled function entity, a data collection modification instruction modifying said data collection instruction, and/or transmitting, towards said second controlled function entity, a machine learning model inferencing modification instruction modifying said machine learning model inferencing instruction for said second controlled functionality, and/or transmitting, towards said orchestrating entity, an indication that said machine learning model deployment related to said goal is modified.

According to a thirteenth aspect, the method according to the first aspect, in relation to said controller functionality, further comprises deciding, based on said goal, whether a machine learning model related to said goal is to be re-trained.

According to a fourteenth aspect, the method according to the thirteenth aspect, in relation to said controller functionality, further comprises transmitting, based on a result of said deciding, towards a third controlled function entity, a request for re-training of said machine learning model related to said goal.

According to a fifteenth aspect, the method according to the fourteenth aspect, in relation to said controller functionality, further comprises receiving, from said third controlled function entity, information on a re-trained machine learning model related to said goal.

According to a sixteenth aspect, the method according to the fifteenth aspect, in relation to said controller functionality, further comprises transmitting, towards said orchestrating entity, an indication that an updated machine learning model related to said goal is received.

According to a seventeenth aspect, the method according to any of the sixth to sixteenth aspects, in relation to said controller functionality, further comprises inhibiting transfer of said machine learning model towards said orchestrating entity.

According to an eighteenth aspect, a method of an orchestrating entity comprises defining a goal related to network performance of a network portion, transmitting, towards a first function entity, a deployment instruction instructing deployment of a controller functionality, and transmitting, towards said first function entity, information on said goal.

According to a nineteenth aspect, the method according to the eighteenth aspect further comprises receiving, from said first function entity, an indication that a machine learning model training related to said goal is completed.

According to a twentieth aspect, the method according to the eighteenth or nineteenth aspect further comprises receiving, from said first function entity, an indication that a machine learning model deployment related to said goal is completed.

According to a twenty-first aspect, the method according to the twentieth aspect further comprises receiving, from said first function entity, an indication that said machine learning model deployment related to said goal is modified.

According to a twenty-second aspect, the method according to the eighteenth aspect further comprises transmitting, towards a second function entity, a deployment instruction instructing deployment of a controlled functionality.

According to a twenty-third aspect, the method according to the twenty-second aspect further comprises receiving, from said first function entity, an indication that an updated machine learning model related to said goal is received.

According to a twenty-fourth aspect, a method of a controlled function entity comprises receiving, from a controller function entity, a deployment instruction instructing deployment of a controlled functionality, and deploying said controlled functionality, wherein said controlled function entity is a first controlled function entity and said controlled functionality is a first controlled functionality, wherein said deployment instruction instructing deployment of said controlled functionality includes a machine learning model inferencing instruction for said controlled functionality, wherein a machine learning model is encoded into said machine learning model inferencing instruction, and wherein in relation to said controlled functionality, the method further comprises receiving, from at least one second controlled function entity, collected data from a respective data source, and analyzing said collected data based on said machine learning model inferencing instruction to gain machine learning model inferencing results.

According to a twenty-fifth aspect, the method according to the twenty-fourth aspect, in relation to said controlled functionality, further comprises transmitting, towards said controller function entity, said machine learning model inferencing results.

According to a twenty-sixth aspect, the method according to the twenty-fourth or twenty-fifth aspect, in relation to said controlled functionality, further comprises receiving, from said controller function entity, a machine learning model inferencing modification instruction modifying said machine learning model inferencing instruction for said controlled functionality.

According to a twenty-seventh aspect, the method according to any of the twenty-fourth to twenty-sixth aspects, in relation to said controlled functionality, further comprises inhibiting transfer of said machine learning model towards an orchestrating entity.

According to a twenty-eighth aspect, a method of a controlled function entity comprises receiving, from an orchestrating entity, a deployment instruction instructing deployment of a controlled functionality, and deploying said controlled functionality, wherein said controlled function entity is a first controlled function entity and said controlled functionality is a first controlled functionality, and wherein in relation to said controlled functionality, the method further comprises receiving, from a controller function entity, a request for re-training of a machine learning model related to a goal related to network performance of a network portion, and discovering, based on said request for re-training of said machine learning model related to said goal, a network environment for possible deployments of further controlled functionalities.

According to a twenty-ninth aspect, the method according to the twenty-eighth aspect, in relation to said controlled functionality, further comprises transmitting, towards a second controlled function entity, a machine learning model training instruction instructing training of said machine learning model related to said goal based on collected data.

According to a thirtieth aspect, the method according to the twenty-ninth aspect, in relation to said controlled functionality, further comprises transmitting, towards at least one third controlled function entity, a deployment instruction instructing deployment of at least one third controlled functionality, and transmitting, towards said at least one third controlled function entity, a data collection instruction instructing data collection from a respective data source.

According to a thirty-first aspect, the method according to the thirtieth aspect, in relation to said controlled functionality, further comprises receiving, from said second controlled function entity, information on said machine learning model related to said goal trained.

According to a thirty-second aspect, the method according to the thirty-first aspect, in relation to said controlled functionality, further comprises transmitting, towards said controller function entity, said information on said machine learning model related to said goal trained.

According to a thirty-third aspect, the method according to any of the twenty-eighth to thirty-second aspects, in relation to said controlled functionality, further comprises inhibiting transfer of said machine learning model towards said orchestrating entity.

According to a thirty-fourth aspect, a method of a controlled function entity comprises receiving, from a controller entity, a deployment instruction instructing deployment of a controlled functionality, and deploying said controlled functionality, wherein said controlled function entity is a first controlled function entity and said controlled functionality is a first controlled functionality, and wherein in relation to said controlled functionality, the method further comprises receiving, from a second controlled function entity, a machine learning model training instruction instructing training of a machine learning model related to a goal related to network performance of a network portion based on collected data, receiving, from at least one third controlled function entity, said collected data from a respective data source, and training said machine learning model related to said goal based on said collected data.

According to a thirty-fifth aspect, the method according to the thirty-fourth aspect, in relation to said controlled functionality, further comprises transmitting, towards said second controlled function entity, information on said machine learning model related to said goal trained.

According to a thirty-sixth aspect, the method according to the thirty-fourth or thirty-fifth aspect, in relation to said controlled functionality, further comprises inhibiting transfer of said machine learning model towards an orchestrating entity.

According to a thirty-seventh aspect, an apparatus of a controller function entity comprises receiving circuitry configured to receive, from an orchestrating entity, a deployment instruction instructing deployment of a controller functionality, and deploying circuitry configured to deploy said controller functionality, wherein in relation to said controller functionality, the apparatus further comprises receiving circuitry configured to receive, from said orchestrating entity, information on a goal related to network performance of a network portion, and transmitting circuitry configured to transmit, based on said goal, towards at least one first controlled function entity, a deployment instruction instructing deployment of at least one first controlled functionality.

According to a thirty-eighth aspect, the apparatus according to the thirty-seventh aspect, in relation to said controller functionality, further comprises deciding circuitry configured to decide, based on said goal, on a deployment scheme of controlled functionalities including said at least one first controlled functionality.

According to a thirty-ninth aspect, the apparatus according to the thirty-eighth aspect, in relation to said controller functionality, further comprises discovering circuitry configured to discover, based on said goal, a network environment for possible deployments of said controlled functionalities including said at least one first controlled functionality, wherein said deciding circuitry is configured to decide based on a result of said discovering.

According to a fortieth aspect, in the apparatus according to the thirty-eighth or thirty-ninth aspect, said deployment scheme comprises an allocation of a plurality of controlled functionalities including said at least one first controlled functionality to a plurality of controlled function entities including said at least one first controlled function entity, respectively.

According to a forty-first aspect, the apparatus according to any of the thirty-seventh to fortieth aspects, in relation to said controller functionality, further comprises transmitting circuitry configured to transmit, towards said at least one first controlled function entity, a data collection instruction instructing data collection from a respective data source.

According to a forty-second aspect, the apparatus according to the forty-first aspect, in relation to said controller functionality, further comprises receiving circuitry configured to receive, from said at least one first controlled function entity, collected data from said respective data source, and training circuitry configured to train a machine learning model related to said goal based on said collected data.

According to a forty-third aspect, the apparatus according to the forty-second aspect, in relation to said controller functionality, further comprises transmitting circuitry configured to transmit, towards said orchestrating entity, an indication that a machine learning model training related to said goal is completed.

According to a forty-fourth aspect, the apparatus according to the forty-second or forty-third aspect, in relation to said controller functionality, further comprises encoding circuitry configured to encode said machine learning model into a machine learning model inferencing instruction, and transmitting circuitry configured to transmit, based on said goal, towards a second controlled function entity, a deployment instruction instructing deployment of a second controlled functionality, wherein said deployment instruction instructing deployment of said second controlled functionality includes said machine learning model inferencing instruction for said second controlled functionality.

According to a forty-fifth aspect, the apparatus according to the forty-fourth aspect, in relation to said controller functionality, further comprises transmitting circuitry configured to transmit, towards said at least one first controlled function entity, a data collection modification instruction instructing said second controlled functionality as a new addressee of collected data from said respective data source.

According to a forty-sixth aspect, the apparatus according to the forty-fifth aspect, in relation to said controller functionality, further comprises transmitting circuitry configured to transmit, towards said orchestrating entity, an indication that a machine learning model deployment related to said goal is completed.

According to a forty-seventh aspect, the apparatus according to any of the forty-fourth to forty-sixth aspects, in relation to said controller functionality, further comprises receiving circuitry configured to receive, from said second controlled function entity, machine learning model inferencing results.

According to a forty-eighth aspect, the apparatus according to the forty-seventh aspect, in relation to said controller functionality, further comprises transmitting circuitry configured to transmit, towards said at least one first controlled function entity, a data collection modification instruction modifying said data collection instruction, and/or transmitting circuitry configured to transmit, towards said second controlled function entity, a machine learning model inferencing modification instruction modifying said machine learning model inferencing instruction for said second controlled functionality, and/or transmitting circuitry configured to transmit, towards said orchestrating entity, an indication that said machine learning model deployment related to said goal is modified.

According to a forty-ninth aspect, the apparatus according to the thirty-seventh aspect, in relation to said controller functionality, further comprises deciding circuitry configured to decide, based on said goal, whether a machine learning model related to said goal is to be re-trained.

According to a fiftieth aspect, the apparatus according to the forty-ninth aspect, in relation to said controller functionality, further comprises transmitting circuitry configured to transmit, based on a result of said deciding, towards a third controlled function entity, a request for re-training of said machine learning model related to said goal.

According to a fifty-first aspect, the apparatus according to the fiftieth aspect, in relation to said controller functionality, further comprises receiving circuitry configured to receive, from said third controlled function entity, information on a re-trained machine learning model related to said goal.

According to a fifty-second aspect, the apparatus according to the fifty-first aspect, in relation to said controller functionality, further comprises transmitting circuitry configured to transmit, towards said orchestrating entity, an indication that an updated machine learning model related to said goal is received.

According to a fifty-third aspect, the apparatus according to any of the forty-second to fifty-second aspects, in relation to said controller functionality, further comprises inhibiting circuitry configured to inhibit transfer of said machine learning model towards said orchestrating entity.

According to a fifty-fourth aspect, an apparatus of an orchestrating entity comprises defining circuitry configured to define a goal related to network performance of a network portion, transmitting circuitry configured to transmit, towards a first function entity, a deployment instruction instructing deployment of a controller functionality, and to transmit, towards said first function entity, information on said goal.

According to a fifty-fifth aspect, the apparatus according to the fifty-fourth aspect further comprises receiving circuitry configured to receive, from said first function entity, an indication that a machine learning model training related to said goal is completed.

According to a fifty-sixth aspect, the apparatus according to the fifty-fourth or fifty-fifth aspect further comprises receiving circuitry configured to receive, from said first function entity, an indication that a machine learning model deployment related to said goal is completed.

According to a fifty-seventh aspect, the apparatus according to the fifty-sixth aspect further comprises receiving circuitry configured to receive, from said first function entity, an indication that said machine learning model deployment related to said goal is modified.

According to a fifty-eighth aspect, the apparatus according to the fifty-fourth aspect further comprises transmitting circuitry configured to transmit, towards a second function entity, a deployment instruction instructing deployment of a controlled functionality.

According to a fifty-ninth aspect, the apparatus according to the fifty-eighth aspect further comprises receiving circuitry configured to receive, from said first function entity, an indication that an updated machine learning model related to said goal is received.

According to a sixtieth aspect, an apparatus of a controlled function entity comprises receiving circuitry configured to receive, from a controller function entity, a deployment instruction instructing deployment of a controlled functionality, and deploying circuitry configured to deploy said controlled functionality, wherein said controlled function entity is a first controlled function entity and said controlled functionality is a first controlled functionality, wherein said deployment instruction instructing deployment of said controlled functionality includes a machine learning model inferencing instruction for said controlled functionality, wherein a machine learning model is encoded into said machine learning model inferencing instruction, and wherein in relation to said controlled functionality, the apparatus further comprises receiving circuitry configured to receive, from at least one second controlled function entity, collected data from a respective data source, and analyzing circuitry configured to analyze said collected data based on said machine learning model inferencing instruction to gain machine learning model inferencing results.

According to a sixty-first aspect, the apparatus according to the sixtieth aspect, in relation to said controlled functionality, further comprises transmitting circuitry configured to transmit, towards said controller function entity, said machine learning model inferencing results.

According to a sixty-second aspect, the apparatus according to the sixtieth or sixty-first aspect, in relation to said controlled functionality, further comprises receiving circuitry configured to receive, from said controller function entity, a machine learning model inferencing modification instruction modifying said machine learning model inferencing instruction for said controlled functionality.

According to a sixty-third aspect, the apparatus according to any of the sixtieth to sixty-second aspects, in relation to said controlled functionality, further comprises inhibiting circuitry configured to inhibit transfer of said machine learning model towards an orchestrating entity.

According to a sixty-fourth aspect, an apparatus of a controlled function entity comprises receiving circuitry configured to receive, from an orchestrating entity, a deployment instruction instructing deployment of a controlled functionality, and deploying circuitry configured to deploy said controlled functionality, wherein said controlled function entity is a first controlled function entity and said controlled functionality is a first controlled functionality, and wherein in relation to said controlled functionality, the apparatus further comprises receiving circuitry configured to receive, from a controller function entity, a request for re-training of a machine learning model related to a goal related to network performance of a network portion, and discovering circuitry configured to discover, based on said request for re-training of said machine learning model related to said goal, a network environment for possible deployments of further controlled functionalities.

According to a sixty-fifth aspect, the apparatus according to the sixty-fourth aspect, in relation to said controlled functionality, further comprises transmitting circuitry configured to transmit, towards a second controlled function entity, a machine learning model training instruction instructing training of said machine learning model related to said goal based on collected data.

According to a sixty-sixth aspect, the apparatus according to the sixty-fifth aspect, in relation to said controlled functionality, further comprises transmitting circuitry configured to transmit, towards at least one third controlled function entity, a deployment instruction instructing deployment of at least one third controlled functionality, and to transmit, towards said at least one third controlled function entity, a data collection instruction instructing data collection from a respective data source.

According to a sixty-seventh aspect, the apparatus according to the sixty-sixth aspect, in relation to said controlled functionality, further comprises receiving circuitry configured to receive, from said second controlled function entity, information on said machine learning model related to said goal trained.

According to a sixty-eighth aspect, the apparatus according to the sixty-seventh aspect, in relation to said controlled functionality, further comprises transmitting circuitry configured to transmit, towards said controller function entity, said information on said machine learning model related to said goal trained.

According to a sixty-ninth aspect, the apparatus according to any of the sixty-fourth to sixty-eighth aspects, in relation to said controlled functionality, further comprises inhibiting circuitry configured to inhibit transfer of said machine learning model towards said orchestrating entity.

According to a seventieth aspect, an apparatus of a controlled function entity comprises receiving circuitry configured to receive, from a controller entity, a deployment instruction instructing deployment of a controlled functionality, and deploying circuitry configured to deploy said controlled functionality, wherein said controlled function entity is a first controlled function entity and said controlled functionality is a first controlled functionality, and wherein in relation to said controlled functionality, the apparatus further comprises receiving circuitry configured to receive, from a second controlled function entity, a machine learning model training instruction instructing training of a machine learning model related to a goal related to network performance of a network portion based on collected data, and to receive, from at least one third controlled function entity, said collected data from a respective data source, and training circuitry configured to train said machine learning model related to said goal based on said collected data.

According to a seventy-first aspect, the apparatus according to the seventieth aspect, in relation to said controlled functionality, further comprises transmitting circuitry configured to transmit, towards said second controlled function entity, information on said machine learning model related to said goal trained.

According to a seventy-second aspect, the apparatus according to the seventieth or seventy-fourth aspect, in relation to said controlled functionality, further comprises inhibiting circuitry configured to inhibit transfer of said machine learning model towards an orchestrating entity.

According to a seventy-third aspect, an apparatus of a controller function entity comprises at least one processor, at least one memory including computer program code, and at least one interface configured for communication with at least another apparatus, the at least one processor, with the at least one memory and the computer program code, being configured to cause the apparatus to perform receiving, from an orchestrating entity, a deployment instruction instructing deployment of a controller functionality, and deploying said controller functionality, wherein in relation to said controller functionality, the at least one processor, with the at least one memory and the computer program code, being configured to cause the apparatus to perform receiving, from said orchestrating entity, information on a goal related to network performance of a network portion, and transmitting, based on said goal, towards at least one first controlled function entity, a deployment instruction instructing deployment of at least one first controlled functionality.

According to a seventy-fourth aspect, in the apparatus according to the seventy-third aspect, in relation to said controller functionality, the at least one processor, with the at least one memory and the computer program code, being configured to cause the apparatus to perform deciding, based on said goal, on a deployment scheme of controlled functionalities including said at least one first controlled functionality.

According to a seventy-fifth aspect, in the apparatus according to the seventy-fourth aspect, in relation to said controller functionality, the at least one processor, with the at least one memory and the computer program code, being configured to cause the apparatus to perform discovering, based on said goal, a network environment for possible deployments of said controlled functionalities including said at least one first controlled functionality, wherein said deciding is based on a result of said discovering.

According to a seventy-sixth aspect, in the apparatus according to the seventy-fourth or seventy-fifth aspect, said deployment scheme comprises an allocation of a plurality of controlled functionalities including said at least one first controlled functionality to a plurality of controlled function entities including said at least one first controlled function entity, respectively.

According to a seventy-seventh aspect, in the apparatus according to any of the seventy-third to seventy-sixth aspects, in relation to said controller functionality, the at least one processor, with the at least one memory and the computer program code, being configured to cause the apparatus to perform transmitting, towards said at least one first controlled function entity, a data collection instruction instructing data collection from a respective data source.

According to a seventy-eighth aspect, in the apparatus according to the seventy-seventh aspect, in relation to said controller functionality, the at least one processor, with the at least one memory and the computer program code, being configured to cause the apparatus to perform receiving, from said at least one first controlled function entity, collected data from said respective data source, and training a machine learning model related to said goal based on said collected data.

According to a seventy-ninth aspect, in the apparatus according to the seventy-eighth aspect, in relation to said controller functionality, the at least one processor, with the at least one memory and the computer program code, being configured to cause the apparatus to perform transmitting, towards said orchestrating entity, an indication that a machine learning model training related to said goal is completed.

According to an eightieth aspect, in the apparatus according to the seventy-eighth or seventy-ninth aspect, in relation to said controller functionality, the at least one processor, with the at least one memory and the computer program code, being configured to cause the apparatus to perform encoding said machine learning model into a machine learning model inferencing instruction, and transmitting, based on said goal, towards a second controlled function entity, a deployment instruction instructing deployment of a second controlled functionality, wherein said deployment instruction instructing deployment of said second controlled functionality includes said machine learning model inferencing instruction for said second controlled functionality.

According to an eighty-first aspect, in the apparatus according to the eightieth aspect, in relation to said controller functionality, the at least one processor, with the at least one memory and the computer program code, being configured to cause the apparatus to perform transmitting, towards said at least one first controlled function entity, a data collection modification instruction instructing said second controlled functionality as a new addressee of collected data from said respective data source.

According to an eighty-second aspect, in the apparatus according to the eighty-first aspect, in relation to said controller functionality, the at least one processor, with the at least one memory and the computer program code, being configured to cause the apparatus to perform transmitting, towards said orchestrating entity, an indication that a machine learning model deployment related to said goal is completed.

According to an eighty-third aspect, in the apparatus according to any of the eightieth to eighty-second aspects, in relation to said controller functionality, the at least one processor, with the at least one memory and the computer program code, being configured to cause the apparatus to perform receiving, from said second controlled function entity, machine learning model inferencing results.

According to an eighty-fourth aspect, in the apparatus according to the eighty-third aspect, in relation to said controller functionality, the at least one processor, with the at least one memory and the computer program code, being configured to cause the apparatus to perform transmitting, towards said at least one first controlled function entity, a data collection modification instruction modifying said data collection instruction, and/or transmitting, towards said second controlled function entity, a machine learning model inferencing modification instruction modifying said machine learning model inferencing instruction for said second controlled functionality, and/or transmitting, towards said orchestrating entity, an indication that said machine learning model deployment related to said goal is modified.

According to an eighty-fifth aspect, in the apparatus according to the seventy-third aspect, in relation to said controller functionality, the at least one processor, with the at least one memory and the computer program code, being configured to cause the apparatus to perform deciding, based on said goal, whether a machine learning model related to said goal is to be re-trained.

According to an eighty-sixth aspect, in the apparatus according to the eighty-fifth aspect, in relation to said controller functionality, the at least one processor, with the at least one memory and the computer program code, being configured to cause the apparatus to perform transmitting, based on a result of said deciding, towards a third controlled function entity, a request for re-training of said machine learning model related to said goal.

According to an eighty-seventh aspect, in the apparatus according to the eighty-sixth aspect, in relation to said controller functionality, the at least one processor, with the at least one memory and the computer program code, being configured to cause the apparatus to perform receiving, from said third controlled function entity, information on a re-trained machine learning model related to said goal.

According to an eighty-eighth aspect, in the apparatus according to the eighty-seventh aspect, in relation to said controller functionality, the at least one processor, with the at least one memory and the computer program code, being configured to cause the apparatus to perform transmitting, towards said orchestrating entity, an indication that an updated machine learning model related to said goal is received.

According to an eighty-ninth aspect, in the apparatus according to any of the seventy-eighth to eighty-eighth aspects, in relation to said controller functionality, the at least one processor, with the at least one memory and the computer program code, being configured to cause the apparatus to perform inhibiting transfer of said machine learning model towards said orchestrating entity.

According to a ninetieth aspect, an apparatus of an orchestrating entity comprises at least one processor, at least one memory including computer program code, and at least one interface configured for communication with at least another apparatus, the at least one processor, with the at least one memory and the computer program code, being configured to cause the apparatus to perform defining a goal related to network performance of a network portion, transmitting, towards a first function entity, a deployment instruction instructing deployment of a controller functionality, and transmitting, towards said first function entity, information on said goal.

According to a ninety-first aspect, in the apparatus according to the ninetieth aspect, the at least one processor, with the at least one memory and the computer program code, being configured to cause the apparatus to perform receiving, from said first function entity, an indication that a machine learning model training related to said goal is completed.

According to a ninety-second aspect, in the apparatus according to the ninetieth or ninety-first aspect, the at least one processor, with the at least one memory and the computer program code, being configured to cause the apparatus to perform receiving, from said first function entity, an indication that a machine learning model deployment related to said goal is completed.

According to a ninety-third aspect, in the apparatus according to the ninety-second aspect, the at least one processor, with the at least one memory and the computer program code, being configured to cause the apparatus to perform receiving, from said first function entity, an indication that said machine learning model deployment related to said goal is modified.

According to a ninety-fourth aspect, in the apparatus according to the ninetieth aspect, the at least one processor, with the at least one memory and the computer program code, being configured to cause the apparatus to perform transmitting, towards a second function entity, a deployment instruction instructing deployment of a controlled functionality.

According to a ninety-fifth aspect, in the apparatus according to the ninety-fourth aspect, the at least one processor, with the at least one memory and the computer program code, being configured to cause the apparatus to perform receiving, from said first function entity, an indication that an updated machine learning model related to said goal is received.

According to a ninety-sixth aspect, an apparatus of a controlled function entity comprises at least one processor, at least one memory including computer program code, and at least one interface configured for communication with at least another apparatus, the at least one processor, with the at least one memory and the computer program code, being configured to cause the apparatus to perform receiving, from a controller function entity, a deployment instruction instructing deployment of a controlled functionality, and deploying said controlled functionality, wherein said controlled function entity is a first controlled function entity and said controlled functionality is a first controlled functionality, wherein said deployment instruction instructing deployment of said controlled functionality includes a machine learning model inferencing instruction for said controlled functionality, wherein a machine learning model is encoded into said machine learning model inferencing instruction, and wherein in relation to said controlled functionality, the at least one processor, with the at least one memory and the computer program code, being configured to cause the apparatus to perform receiving, from at least one second controlled function entity, collected data from a respective data source, and analyzing said collected data based on said machine learning model inferencing instruction to gain machine learning model inferencing results.

According to a ninety-seventh aspect, in the apparatus according to the ninety-sixth aspect, in relation to said controlled functionality, the at least one processor, with the at least one memory and the computer program code, being configured to cause the apparatus to perform transmitting, towards said controller function entity, said machine learning model inferencing results.

According to a ninety-eighth aspect, in the apparatus according to the ninety-sixth or ninety-seventh aspect, in relation to said controlled functionality, the at least one processor, with the at least one memory and the computer program code, being configured to cause the apparatus to perform receiving, from said controller function entity, a machine learning model inferencing modification instruction modifying said machine learning model inferencing instruction for said controlled functionality.

According to a ninety-ninth aspect, in the apparatus according to any of the ninety-sixth to ninety-eighth aspects, in relation to said controlled functionality, the at least one processor, with the at least one memory and the computer program code, being configured to cause the apparatus to perform inhibiting transfer of said machine learning model towards an orchestrating entity.

According to a hundredth aspect, an apparatus of a controlled function entity comprises at least one processor, at least one memory including computer program code, and at least one interface configured for communication with at least another apparatus, the at least one processor, with the at least one memory and the computer program code, being configured to cause the apparatus to perform receiving, from an orchestrating entity, a deployment instruction instructing deployment of a controlled functionality, and deploying said controlled functionality, wherein said controlled function entity is a first controlled function entity and said controlled functionality is a first controlled functionality, and wherein in relation to said controlled functionality, the at least one processor, with the at least one memory and the computer program code, being configured to cause the apparatus to perform receiving, from a controller function entity, a request for re-training of a machine learning model related to a goal related to network performance of a network portion, and discovering, based on said request for re-training of said machine learning model related to said goal, a network environment for possible deployments of further controlled functionalities.

According to a hundred-first aspect, in the apparatus according to the hundredth aspect, in relation to said controlled functionality, the at least one processor, with the at least one memory and the computer program code, being configured to cause the apparatus to perform transmitting, towards a second controlled function entity, a machine learning model training instruction instructing training of said machine learning model related to said goal based on collected data.

According to a hundred-second aspect, in the apparatus according to the hundred-first aspect, in relation to said controlled functionality, the at least one processor, with the at least one memory and the computer program code, being configured to cause the apparatus to perform transmitting, towards at least one third controlled function entity, a deployment instruction instructing deployment of at least one third controlled functionality, and transmitting, towards said at least one third controlled function entity, a data collection instruction instructing data collection from a respective data source.

According to a hundred-third aspect, in the apparatus according to the hundred-second aspect, in relation to said controlled functionality, the at least one processor, with the at least one memory and the computer program code, being configured to cause the apparatus to perform receiving, from said second controlled function entity, information on said machine learning model related to said goal trained.

According to a hundred-fourth aspect, in the apparatus according to the hundred-third aspect, in relation to said controlled functionality, the at least one processor, with the at least one memory and the computer program code, being configured to cause the apparatus to perform transmitting, towards said controller function entity, said information on said machine learning model related to said goal trained.

According to a hundred-fifth aspect, in the apparatus according to any of the hundredth to hundred-fourth aspects, in relation to said controlled functionality, the at least one processor, with the at least one memory and the computer program code, being configured to cause the apparatus to perform inhibiting transfer of said machine learning model towards said orchestrating entity.

According to a hundred-sixth aspect, an apparatus of a controlled function entity comprises at least one processor, at least one memory including computer program code, and at least one interface configured for communication with at least another apparatus, the at least one processor, with the at least one memory and the computer program code, being configured to cause the apparatus to perform receiving, from a controller entity, a deployment instruction instructing deployment of a controlled functionality, and deploying said controlled functionality, wherein said controlled function entity is a first controlled function entity and said controlled functionality is a first controlled functionality, and wherein in relation to said controlled functionality, the at least one processor, with the at least one memory and the computer program code, being configured to cause the apparatus to perform receiving, from a second controlled function entity, a machine learning model training instruction instructing training of a machine learning model related to a goal related to network performance of a network portion based on collected data, receiving, from at least one third controlled function entity, said collected data from a respective data source, and training said machine learning model related to said goal based on said collected data.

According to a hundred-seventh aspect, in the apparatus according to the hundred-sixth aspect, in relation to said controlled functionality, the at least one processor, with the at least one memory and the computer program code, being configured to cause the apparatus to perform transmitting, towards said second controlled function entity, information on said machine learning model related to said goal trained.

According to a hundred-eighth aspect, in the apparatus according to the hundred-sixth or hundred-seventh aspect, in relation to said controlled functionality, the at least one processor, with the at least one memory and the computer program code, being configured to cause the apparatus to perform inhibiting transfer of said machine learning model towards an orchestrating entity.

According to a hundred-ninth aspect, a computer program product comprises computer-executable computer program code which, when the program is run on a computer, is configured to cause the computer to carry out the method according to any one of the method related aspects above.

According to a hundred-tenth aspect, the computer program product according to the hundred-ninth aspect comprises a computer-readable medium on which the computer-executable computer program code is stored, and/or the program is directly loadable into an internal memory of the computer or a processor thereof.

### List of acronyms and abbreviations

- 3GPP: 3rd Generation Partnership Project
- AI: artificial intelligence
- CL: closed loop
- eNA: enablers for Network Automation
- ETSI: European Telecommunications Standards Institute
- IH: inference host
- MDAS: management data analytics service
- ML: machine learning
- Near-RT: Near real-time
- NF: network function
- Non-RT: Non real-time
- NWDAF: network data analytics function
- OAM: Operations, Administration and Management
- OODA: observe, orient, decide, and act
- O-CU: open central unit
- O-DU: open distributed unit
- O-RAN: open radio access network
- RAN: radio access network
- RIC: radio intelligent controller
- SMO: service management and orchestration
- TH: training host

## Claims

1. An apparatus of a controller function entity, the apparatus comprising
receiving circuitry configured to receive, from an orchestrating entity, a deployment instruction instructing deployment of a controller functionality, and
deploying circuitry configured to deploy said controller functionality, wherein
in relation to said controller functionality, the apparatus further com prises
receiving circuitry configured to receive, from said orchestrating entity, information on a goal related to network performance of a network portion, and
transmitting circuitry configured to transmit, based on said goal, towards at least one first controlled function entity, a deployment instruction instructing deployment of at least one first controlled functionality.

2. The apparatus according to claim 1, wherein
in relation to said controller functionality, the apparatus further comprises
deciding circuitry configured to decide, based on said goal, on a deployment scheme of controlled functionalities including said at least one first controlled functionality.

3. The apparatus according to claim 2, wherein
in relation to said controller functionality, the apparatus further comprises
discovering circuitry configured to discover, based on said goal, a network environment for possible deployments of said controlled functionalities including said at least one first controlled functionality, wherein
said deciding circuitry is configured to decide based on a result of said discovering.

4. The apparatus according to claim 2 or 3, wherein
said deployment scheme comprises an allocation of a plurality of controlled functionalities including said at least one first controlled functionality to a plurality of controlled function entities including said at least one first controlled function entity, respectively.

5. The apparatus according to any of claims 1 to 4, wherein
in relation to said controller functionality, the apparatus further comprises
receiving circuitry configured to receive, from said at least one first controlled function entity, collected data from a respective data source, and
training circuitry configured to train a machine learning model related to said goal based on said collected data.

6. The apparatus according to claim 5, wherein
in relation to said controller functionality, the apparatus further comprises
transmitting circuitry configured to transmit, towards said orchestrating entity, an indication that a machine learning model training related to said goal is completed.

7. The apparatus according to claim 5 or 6, wherein
in relation to said controller functionality, the apparatus further comprises
encoding circuitry configured to encode said machine learning model into a machine learning model inferencing instruction, and
transmitting circuitry configured to transmit, based on said goal, towards a second controlled function entity, a deployment instruction instructing deployment of a second controlled functionality, wherein
said deployment instruction instructing deployment of said second controlled functionality includes said machine learning model inferencing instruction for said second controlled functionality.

8. The apparatus according to claim 7, wherein
in relation to said controller functionality, the apparatus further comprises
transmitting circuitry configured to transmit, towards said at least one first controlled function entity, a data collection modification instruction instructing said second controlled functionality as a new addressee of collected data from said respective data source.

9. The apparatus according to claim 7 or 8, wherein
in relation to said controller functionality, the apparatus further comprises
receiving circuitry configured to receive, from said second controlled function entity, machine learning model inferencing results.

10. The apparatus according to claim 9, wherein
in relation to said controller functionality, the apparatus further comprises
transmitting circuitry configured to transmit, towards said at least one first controlled function entity, a data collection modification instruction modifying said data collection instruction, and/or
transmitting circuitry configured to transmit, towards said second controlled function entity, a machine learning model inferencing modification instruction modifying said machine learning model inferencing instruction for said second controlled functionality, and/or
transmitting circuitry configured to transmit, towards said orchestrating entity, an indication that said machine learning model deployment related to said goal is modified.

11. The apparatus according to claim 1, wherein
in relation to said controller functionality, the apparatus further comprises
deciding circuitry configured to decide, based on said goal, whether a machine learning model related to said goal is to be re-trained.

12. The apparatus according to claim 11, wherein
in relation to said controller functionality, the apparatus further comprises
transmitting circuitry configured to transmit, based on a result of said deciding, towards a third controlled function entity, a request for re-training of said machine learning model related to said goal.

13. The apparatus according to claim 12, wherein
in relation to said controller functionality, the apparatus further comprises
receiving circuitry configured to receive, from said third controlled function entity, information on a re-trained machine learning model related to said goal.

14. The apparatus according to claim 13, wherein
in relation to said controller functionality, the apparatus further comprises
transmitting circuitry configured to transmit, towards said orchestrating entity, an indication that an updated machine learning model related to said goal is received.

15. The apparatus according to any of claims 5 to 14, wherein
in relation to said controller functionality, the apparatus further comprises
inhibiting circuitry configured to inhibit transfer of said machine learning model towards said orchestrating entity.
